# EUROPEAN PATENT APPLICATION

(11) **EP 4 424 906 A1**
(43) Date of publication of application: **04.09.2024**
(21) Application number: 24160767.0
(22) Date of filing: 01.03.2024
(51) Int. Cl.: D06P 1/44, C09D 11/322, C09D 11/38, C09D 11/54, D06P 1/52, D06P 5/02, D06P 5/08, D06P 5/30

(54) **INK JET TREATMENT LIQUID COMPOSITION FOR PIGMENT TEXTILE PRINTING, AND INK JET TEXTILE PRINTING RECORDING METHOD**

(30) Priority: 03.03.2023 JP 2023032929
(71) Applicant: Seiko Epson Corporation, Tokyo 160-8801 (JP)
(72) Inventor: SAKUMA, Daisuke, Suwa-shi, 392-8502 (JP); MIYASA, Ryota, Suwa-shi, 392-8502 (JP)
(74) Representative: Lewis Silkin LLP

(57) **Abstract**

An ink jet treatment liquid composition for pigment textile printing including a particle containing organopolysiloxane, a water-soluble organic solvent having an SP value of 12.5 or less, and water, in which a content of the particle containing the organopolysiloxane is 7% by mass or more with respect to a total amount of the treatment liquid composition.

## Description

The present application is based on, and claims priority from JP Application Serial Number 2023-032929, filed March 3, 2023, the disclosure of which is hereby incorporated by reference herein in its entirety.

### BACKGROUND

### 1. Technical Field

The present disclosure relates to an ink jet treatment liquid composition for pigment textile printing and an ink jet textile printing recording method.

### 2. Related Art

Attempts are made to apply an ink jet method to not only recording of images on paper and the like, but also textile printing on fabrics, and various ink jet textile printing methods are investigated. An ink jet ink for textile printing contains a coloring material in order to obtain an image having a desired color, and as the coloring material, dyes and pigments are used. In addition, in ink jet textile printing, many investigations are conducted on inks and recording methods.

For example, in ink jet textile printing, pretreatment of fabrics and the like are investigated in order to enhance the color developing properties and fastness of images using pigments.

JP-A-2016-089288 is an example of the related art.

Pigment textile printing may exhibit inferior color development compared to dye textile printing, and further improvement thereof is required. Ink jet pigment textile printing has a simple process compared to analog textile printing and ink jet dye textile printing and is excellent in terms of low environmental load such as drainage. Therefore, it is required to improve the color developing properties of an image while maintaining a simple process. Among such demands, an inkjet treatment liquid composition for pigment textile printing that exhibits favorable color developing properties of an image formed by a pigment ink and favorable ejection stability of the treatment liquid itself is required.

### SUMMARY

According to an aspect of the present disclosure, there is provided an ink jet treatment liquid composition for pigment textile printing including
a particle containing organopolysiloxane,
a water-soluble organic solvent having an SP value of 12.5 or less, and water, in which
a content of the particle containing the organopolysiloxane is 7% by mass or more with respect to a total amount of the treatment liquid composition.

According to another aspect of the present disclosure, there is provided an ink jet textile printing recording method including
an ink attachment step of attaching an ink jet ink composition containing a pigment and water to a fabric by an ink jet method, and
a treatment liquid attachment step of attaching the treatment liquid composition to the fabric by an ink jet method, after the ink attachment step.

### BRIEF DESCRIPTION OF THE DRAWINGS

FIG. 1 is a schematic perspective view of an ink jet textile printing apparatus configured to be applicable to a recording method according to an embodiment.
FIG. 2 is a schematic view showing an example of arrangement of ink jet heads of an ink jet textile printing apparatus.
FIG. 3 is a schematic view showing an example of the arrangement of the ink jet head of the ink jet textile printing apparatus.
FIG. 4 is a schematic view showing an example of arrangement of ink jet heads of an ink jet textile printing apparatus.
FIG. 5 is a table (Table 1) showing compositions, conditions, and evaluation results according to Examples.
FIG. 6 is a table (Table 2) showing compositions, conditions, and evaluation results according to Examples.
FIG. 7 is a table (Table 3) showing compositions, conditions, and evaluation results according to Examples and Comparative Examples.

### DESCRIPTION OF EMBODIMENTS

Hereinafter, embodiments of the present disclosure will be described. The embodiments described below describe examples of the present disclosure. The present disclosure is not limited to the following embodiments, and includes various modifications implemented within a range not changing a gist of the present disclosure. It should be noted that not all of the configurations described below are essential configurations of the present disclosure.

### 1. Ink Jet Treatment Liquid Composition for Pigment Textile Printing

The ink jet treatment liquid composition for pigment textile printing according to the present embodiment includes particles containing organopolysiloxane, a water-soluble organic solvent having an SP value of 12.5 or less, and water.

### 1.1. Particle Containing Organopolysiloxane

The treatment liquid composition of the present embodiment contains particles containing organopolysiloxane. The particles are not particularly limited as long as the particles contain organopolysiloxane, and may be, for example, particles of organopolysiloxane itself or particles in a state in which the organopolysiloxane is dispersed with an emulsifier or the like. The property of the organopolysiloxane in the particles may be a solid or a liquid. For example, when an oily organopolysiloxane is dispersed in water in the form of particles by an emulsifier, the dispersed particles correspond to particles containing organopolysiloxane.

Organopolysiloxane is a generic term for organic silicon compounds having a siloxane bond "-Si(R¹R²)-O-" as a skeleton, in which a methyl group, a phenyl group, a vinyl group, an amino group, or the like is bonded to the siloxane bond as organic groups R¹ and R². Due to the chemical composition and the molecular weight, the organopolysiloxane exhibits oil-like (oily), rubber-like, or resin-like properties, and is referred to as silicone oil, silicone rubber, or silicone resin, respectively.

The organopolysiloxane used in the treatment liquid composition of the present embodiment is more preferably an oily compound. When the organopolysiloxane is an oily compound, the organopolysiloxane is easily stably dispersed in the form of particles in an aqueous matrix by an emulsification treatment described below.

The molecular structure of the organopolysiloxane is not particularly limited, and a linear structure, a branched structure, a cyclic structure, a grid-like structure, a cage-like structure, and the like can be exemplified. When the molecular structure of the organopolysiloxane is an acyclic structure, usually, one or two or more groups selected from a hydrocarbon group, an alkoxy group, a hydroxyl group, a hydrogen atom, and a halogen, which may have a substituent, are bonded to the terminal Si atom of this molecule.

The organopolysiloxane is not particularly limited, and examples thereof include dimethyl silicone, alkyl-modified silicone, amino-modified silicone, epoxy-modified silicone, cyclic silicone, and methyl phenyl silicone. These may be used alone or as a mixture of two or more types thereof.

In addition, as the organopolysiloxane, those commercially available as silicone oils may be used. Examples thereof include dimethyl silicone oil, methyl phenyl silicone oil, methyl hydrogen silicone oil, polyether-modified silicone oil, aralkyl-modified silicone oil, fluoroalkyl-modified silicone oil, long-chain alkyl-modified silicone oil, higher fatty acid ester-modified silicone oil, higher fatty acid amide-modified silicone oil, polyether/long-chain alkyl/aralkyl-modified silicone oil, long-chain alkyl/aralkyl-modified silicone oil, phenyl-modified silicone oil, and polyether/methoxy-modified silicone oil.

In addition, among the above-exemplified organopolysiloxanes, it is more preferable that the organopolysiloxane is a nonionic silicone. In addition, among the above-exemplified organopolysiloxanes, it is more preferable that the organopolysiloxane is an unmodified silicone. Such organopolysiloxanes are chemically more stable and are less likely to cause yellowing or the like of the formed image.

Further, the organopolysiloxane is more preferably one or more selected from dimethyl silicone, methyl phenyl silicone, and methyl hydrogen silicone.

Examples of commercially available products of silicone oils include dimethyl silicone (KF-96 series, manufactured by Shin-Etsu Chemical Co., Ltd.), methyl hydrogen type polysiloxane (KF-99 series, KF-9901, and the like, manufactured by Shin-Etsu Chemical Co., Ltd.), methyl phenyl silicone (KF-50 series and the like, manufactured by Shin-Etsu Chemical Co., Ltd.), and silicone-branched silicone treatment agent (KF-9908, KF-9909, and the like, manufactured by Shin-Etsu Chemical Co., Ltd.).

For example, the viscosity of the silicone at 25°C is not particularly limited, and the viscosity is preferably 1000 mPa·s or less, more preferably 50 mPa·s or more, even more preferably 500 mPa·s or more and 900 mPa·s or less, and still even more preferably 600 mPa·s or more and 700 mPa·s or less. In addition, the base oil viscosity when the silicone is emulsified and dispersed is not particularly limited, and the upper limit is preferably 1,000,000 mm²/s or less, and more preferably 100,000 mm²/s or less, and the lower limit is preferably 10 mm²/s or more, and more preferably 10 mm²/s or more. The base oil viscosity indicates the viscosity of the base oil and is a numerical value obtained by measuring the magnitude of the internal resistance of the base oil. The higher the numerical value of the base oil viscosity, the higher the viscosity, and the smaller the numerical value, the lower the viscosity of the base oil.

The organopolysiloxane may be blended in the form of particles by emulsifying various surfactants as emulsifiers. As the emulsifier at that time, for example, a nonionic surfactant, a negative ion (anionic) surfactant, a positive ion (cationic) surfactant, an amphoteric surfactant, a phospholipid, or the like can be used.

Examples of the nonionic surfactant include glycerin fatty acid esters, polyglycerin fatty acid esters, propylene glycol fatty acid esters, sorbitan fatty acid esters, fatty acid esters of sorbitol and alkylene glycol adducts thereof, polyalkylene glycol fatty acid esters, sucrose fatty acid esters, polysorbate 20, polysorbate 60, polysorbate 80, polyoxyalkylene alkyl ethers, and polyoxyethylene alkylphenyl ethers.

In addition, as the nonionic surfactant, for example, nonionic surfactants such as polyoxyethylene glycerin fatty acid ester, polyglycerin fatty acid esters, sorbitan fatty acid ester, polyoxyethylene sorbitan fatty acid ester, polyoxyethylene sorbit fatty acid ester, polyethylene glycol fatty acid ester, polyoxyethylene castor oil, polyoxyethylene hardened castor oil, polyoxyethylene phytosterol, polyoxyethylene polyoxypropylene alkyl ether, polyoxyethylene lanolin, polyoxyethylene lanolin alcohol, polyoxyethylene beeswax derivatives, polyoxyethylene alkylamine, polyoxyethylene fatty acid amide, polyoxyethylene alkylphenyl formaldehyde condensates, polyoxyethylene alkyl ether phosphoric acid (salt), and the like are suitably used.

Examples of the anionic surfactant include alkyl sulfate ester salt, polyoxyethylene alkyl sulfate ester salt, alkyl benzene sulfonate, and α-olefin sulfonate. Examples of the cationic surfactant include alkyltrimethylammonium chloride, dialkyldimethylammonium chloride, and benzalkonium chloride. Examples of the amphoteric surfactant include alkyl dimethyl aminoacetic acid betaine, and alkyl amido dimethyl aminoacetic acid betaine. Further, naturally derived surfactants may be used, and examples thereof include lecithin, lanolin, cholesterol, and saponin.

The blending amount of the emulsifier when emulsifying the organopolysiloxane is preferably less than 20% by mass, more preferably 15% by mass or less, and particularly preferably 10% by mass or less, of the total amount of the emulsion composition.

In addition, it is desirable that the average particle diameter of the particles of the emulsified particulate organopolysiloxane is 2 µm or less, preferably 1 µm or less, and more preferably within a range of 0.2 to 0.8 µm.

The content of the particles containing the organopolysiloxane in the treatment liquid composition of the present embodiment is 7% by mass or more with respect to the total amount of the treatment liquid composition. The content is preferably 9% by mass or more, more preferably 10% by mass or more, and even more preferably 12% by mass or more. With such a content, an image having favorable color developing properties can be formed.

The upper limit of the content of the particles containing the organopolysiloxane in the treatment liquid composition of the present embodiment is not particularly limited, and the upper limit is preferably 30% by mass or less, more preferably 20% by mass or less, and even more preferably 17% by mass or less with respect to the total amount of the treatment liquid composition.

When the content of the particles containing the organopolysiloxane in the treatment liquid composition of the present embodiment is within the above range, the system of the treatment liquid composition is more easily stabilized, and the ejection stability when the treatment liquid composition is ejected by an inkjet method can be further improved.

On the other hand, the content of the particles containing the organopolysiloxane is preferably 90% by mass or more with respect to the total solid content in the treatment liquid composition. That is, 90% by mass or more of the solid content remaining when the treatment liquid composition is dried is preferably organopolysiloxane. The content of the particles containing the organopolysiloxane with respect to the total solid content in the treatment liquid composition is more preferably 95% by mass or more, even more preferably 98% by mass or more, and still even more preferably 99% by mass or more.

When the content of the particles containing the organopolysiloxane with respect to the total solid content in the treatment liquid composition is 90% by mass or more, a coating film with a sufficiently low refractive index can be easily formed, and an image with more favorable color developing properties can be formed. In addition, when the treatment liquid composition is ejected by an ink jet method, the ejection stability can be further improved.

### 1.2. Water-Soluble Organic Solvent Having SP Value of 12.5 or Less

The ink jet treatment liquid composition for pigment textile printing according to the present embodiment includes a water-soluble organic solvent having an SP value of 12.5 or less. The water-soluble organic solvent having an SP value of 12.5 or less has relatively high hydrophobicity and the dispersibility of the particles containing the organopolysiloxane in the treatment liquid composition is easily and favorably maintained. It is considered that this is because the hydrophilic-hydrophobic balance between the particles containing the organopolysiloxane and water can be improved.

Here, the SP value will be described. The SP value is an SP value based on the Hansen method. In the Hansen method, the SP value δ is classified into three terms and calculated by being expressed such that δ² = δ_{d}² + δₚ² + δₕ². δ_{d}, δₚ, and δₕ are solubility parameters corresponding to the dispersion force term, the dipole-dipole force term, and the hydrogen bonding force term, respectively.

Further, the unit of the SP value is (cal/cm³)^{1/2}, and the SP value is a value (also referred to as HSP) proposed by Hansen based on an idea that "two substances with similar intermolecular interactions easily dissolve in each other. The SP value can be estimated by calculation and can also be obtained experimentally or empirically, and SP values of many materials are described in various documents. In the present embodiment, the value derived by using calculation software Hansen-Solubility HSPiP can be used as the SP value.

Although not limited to the following, examples of the water-soluble organic solvent having an SP value of 12.5 or less and the SP value thereof based on the Hansen method are given. For example, there may be mentioned ethanol (SP value: 11.8), n-propyl alcohol (SP value: 11.8), 1,2-hexanediol (SP value: 12.1), butoxypropanol (SP value: 8.9), 2-ethyl-1,3-hexanediol (SP value: 11.6), hexane (SP value: 7.45), cyclohexane (SP value: 8.40), and 3,5,5-trimethyl-2-cyclohexene-1-one (SP value: 8.87), xylene (SP value: 8.95), ethylbenzene (SP value: 8.93), butyl acetate (SP value: 8.70), ethyl octanoate (SP value: 8.3), 3-methoxybutyl acetate (SP value: 8.71), oleic acid (SP value: 8.69), dodecyl acrylate (SP value: 8.63), diethyl ether (SP value: 7.82), ethyl propyl ether (SP value: 8.8), ethylene glycol monomethyl ether (SP value: 11.4), ethylene glycol monoisopropyl ether (SP value: 9.2), ethylene glycol monobutyl ether (SP value: 9.8), diethylene glycol monomethyl ether (SP value: 10.7), diethylene glycol monobutyl ether (SP value: 10.0), diethylene glycol monoisobutyl ether (SP value: 8.7), diethylene glycol dimethyl ether (SP value: 9.4), diethylene glycol ethyl methyl ether (SP value: 8.3), diethylene glycol diethyl ether (SP value: 8.1), diethylene glycol isopropyl methyl ether (SP value: 7.9), diethylene glycol butyl methyl ether (SP value: 8.1), diethylene glycol dibutyl ether (SP value: 7.7), propylene glycol monomethyl ether (SP value: 10.4), propylene glycol n-propyl ether (SP value: 9.8), propylene glycol n-butyl ether (SP value: 9.7), propylene glycol monophenyl ether (SP value: 9.4), dipropylene glycol monomethyl ether (SP value: 9.6), dipropylene glycol monoethyl ether (SP value: 10.9), dipropylene glycol n-propyl ether (SP value: 9.5), dipropylene glycol n-butyl ether (SP value: 9.4), dipropylene glycol dimethyl ether (SP value: 7.88), triethylene glycol monomethyl ether (SP value: 10.7), triethylene glycol monobutyl ether (SP value: 10.0), triethylene glycol dimethyl ether (SP value: 8.7), triethylene glycol butyl methyl ether (SP value: 8.0), tripropylene glycol monomethyl ether (SP value: 9.1), tripropylene glycol n-butyl ether (SP value: 9.3), tripropylene glycol dimethyl ether (SP value: 7.4), tetraethylene glycol dimethyl ether (SP value: 8.9), ethylene glycol monomethyl ether acetate (SP value: 8.96), ethylene glycol monoethyl ether acetate (SP value: 8.91), ethylene glycol monobutyl ether acetate (SP value: 8.85), diethylene glycol monobutyl ether acetate (SP value: 8.94), and dipropylene glycol monoethyl ether acetate (SP value: 8.6).

The water-soluble organic solvent having an SP value of 12.5 or less is more preferably a polyhydric alcohol or a glycol ether from the viewpoint of more easily stabilizing the dispersion structure of the organopolysiloxane. As the polyhydric alcohol, 1,2-hexanediol is more preferable. As the glycol ether, tetraethylene glycol dimethyl ether, triethylene glycol monobutyl ether, triethylene glycol monomethyl ether, and triethylene glycol monomethyl ether are more preferable, and triethylene glycol monobutyl ether, triethylene glycol monomethyl ether, and triethylene glycol monomethyl ether are particularly preferable. The polyhydric alcohol is more preferable from the viewpoint of not causing bleeding of an image.

Further, the lower limit of the SP value of the water-soluble organic solvent having an SP value of 12.5 or less is more preferably 9 or more. In this manner, the system of the treatment liquid composition can be further stabilized.

A plurality of types of water-soluble organic solvents having an SP value of 12.5 or less may be used. The total content of the organic solvents having an SP value of less than 12.5 is 0.01% by mass or more and 10.0% by mass or less, preferably 0.1% by mass or more and 5.0% by mass or less, and even more preferably 0.1% by mass or more and 3.0% by mass or less with respect to the total amount of the treatment liquid composition. When the content of the organic solvent having an SP value of less than 12.5 is within such a range, the dispersion structure of the particles of the organopolysiloxane is more easily stabilized.

### 1.3. Water

The ink jet treatment liquid composition for pigment textile printing according to the present embodiment includes water. Examples of water include pure water such as ion exchange water, ultrafiltered water, reverse osmosis water, and distilled water, and water such as ultrapure water, from which ionic impurities are removed as much as possible. In addition, when water sterilized by irradiation with ultraviolet rays, addition of hydrogen peroxide, or the like is used, the generation of bacteria or fungi when the composition is stored for a long period of time can be prevented.

The content of the water is 30% by mass or more, preferably 40% by mass or more, more preferably 45% by mass or more, and even more preferably 50% by mass or more, with respect to the total amount of the treatment liquid composition. The term water in the treatment liquid includes, for example, water contained in the organopolysiloxane dispersion used as a raw material and water to be added. When the water content is set to 30% by mass or more, the treatment liquid composition have a relatively low viscosity. Further, the upper limit of the content of the water is preferably 90% by mass or less, more preferably 85% by mass or less, and even more preferably 80% by mass or less, with respect to the total amount of the treatment liquid composition. In the present specification, the term "aqueous composition" refers to a composition containing 30% by mass or more of water with respect to the total mass (100% by mass) of the composition.

### 1.4. Blending Ratio and the Like

In the ink jet treatment liquid composition for pigment textile printing according to the present embodiment, the mass ratio of the content of the water-soluble organic solvent having an SP value of 12.5 or less to the content of the particles containing organopolysiloxane is preferably 0.02 or more and 0.35 or less, more preferably 0.04 or more and 0.27 or less, and even more preferably 0.06 or more and 0.25 or less. By blending these materials in this manner, the dispersion structure in the treatment liquid composition is more easily stabilized, and thus the printing stability in ink jet recording can be further enhanced.

### 1.5. Other Components

### Water-Soluble Organic Solvent Having SP Value of 13 or More

The treatment liquid composition may contain a water-soluble organic solvent having an SP value of 13 or more. The water-soluble organic solvent having an SP value of 13 or more is classified as a so-called moisturizer. The water-soluble organic solvent having an SP value of 13 or more has relatively high hydrophilicity, and the dispersibility of the particles containing organopolysiloxane in the treatment liquid composition is easily and more favorably maintained. It is considered that this is because the hydrophilic-hydrophobic balance between the particles containing the organopolysiloxane and the water can be further improved. Since the water-soluble organic solvent having an SP value of 13 or more has an SP value between the SP values of the water-soluble organic solvent having an SP value of 12.5 or less and water (SP value: 23.9), it is considered that the continuity of hydrophilicity or hydrophobicity can be further improved due to both the water-soluble organic solvents.

Although the water-soluble organic solvent having an SP value of 13 or more is not limited to the following, examples of the organic solvent and the SP value thereof based on the Hansen method are given. For example, there may be mentioned methanol (SP value: 14.84), 1,3-butanediol (SP value: 14.47), 1,3-propanediol (SP value: 14.98), triethylene glycol (SP value: 13.5), glycerin (SP value: 16.7), trimethylolpropane (SP value: 14.4), γ-butyrolactone (SP value: 14.8), 2-pyrrolidone (y-butyrolactam) (SP value: 14.2), ethylene glycol (SP value: 16.11), propylene glycol (SP value: 14.2), and the like. The water-soluble organic solvent is more preferably glycol, and propylene glycol is particularly preferable.

The upper limit of the SP value of the water-soluble organic solvent having an SP value of 13 or more is not particularly limited, is preferably 19 or less and more preferably 17 or less, and may be 15 or less. Within such a range, the system of the treatment liquid composition can be further stabilized.

A plurality of types of water-soluble organic solvents having an SP value of 13 or more may be used. When the treatment liquid composition contains the water-soluble organic solvent having an SP value of 13 or more, the total content thereof is not particularly limited and is preferably 10% by mass or more and 50% by mass or less, more preferably 15% by mass or more and 40% by mass or less, and even more preferably 20% by mass or more and 35% by mass or less, with respect to the total amount of the treatment liquid composition.

In addition, when the treatment liquid composition contains a water-soluble organic solvent having an SP value of 13 or more, the mass ratio of the content of the water-soluble organic solvent having an SP value of 13 or more to the content of the particles containing the organopolysiloxane is preferably 0.5 or more and 4 or less, more preferably 1 or more and 3.5 or less, and even more preferably 1 or more and 2 or less. In this manner, more favorable ejection stability can be obtained, and the generation of mist can be further reduced.

### Coloring Material

The content of the coloring material in the treatment liquid composition is preferably 0.1% by mass or less, and more preferably 0.01% by mass or less, with respect to the total amount of the treatment liquid composition, and it is more preferable that the treatment liquid composition does not contain the coloring material. When the treatment liquid composition contains only a small amount of the coloring material or does not contain the coloring material, the property of a low refractive index of the coating film formed by the organopolysiloxane can be further effectively extracted.

That is, when the treatment liquid composition contains only a small amount of the coloring material or does not contain the coloring material, the light incident on the coating film is less likely to be shielded by the coloring material, and the color developing properties of the ink jet ink composition can be further enhanced.

### Chelating Agent

The treatment liquid composition may contain a chelating agent. Examples of the chelating agent include ethylenediaminetetraacetic acid and salts thereof (such as ethylenediaminetetraacetic acid dihydrogen disodium salt, ethylene diamine nitrilotriacetate, hexametaphosphate, pyrophosphate, and metaphosphate).

### Antibacterial Agent

An antibacterial agent, a preservative, and a fungicide may be used in the treatment liquid composition. Examples of the antibacterial agent, the preservative, and the fungicide include sodium benzoate, sodium pentachlorophenolate, sodium 2-pyridinethiol-1-oxide, sodium sorbate, sodium dehydroacetate, PROXEL CRL, PROXEL BDN, PROXEL GXL, PROXEL XL-2, PROXEL IB, and PROXELTN (trade names, all manufactured by LONZA KK.), and 4-chloro-3-methylphenol (such as PREVENTOL CMK manufactured by Bayer AG).

### Other Substances

The treatment liquid composition may contain the components contained in the inkjet composition as long as the function and dispersion structure thereof are not impaired.

### 1.6. Production and Physical Properties

The ink jet treatment liquid composition for pigment textile printing is attached by an ink jet method. In such a case, the viscosity of the treatment liquid composition at 20°C is preferably 1.5 mPa·s or more and 15 mPa·s or less, more preferably 1.5 mPa·s or more and 7 mPa·s or less, and even more preferably 1.5 mPa·s or more and 5.5 mPa·s or less. As a result of the treatment liquid composition attached to the fabric by the ink jet method, it is easy to efficiently form a predetermined image in the fabric.

The surface tension of the treatment liquid composition at 25°C is 40 mN/m or less, preferably 38 mN/m or less, and more preferably 35 mN/m or less from the viewpoint of ensuring appropriate wet spreadability to the fabric. In addition, the surface tension is preferably 20 mN/m or more, more preferably 25 mN/m or more, and even more preferably 30 mN/m or more.

The surface tension can be measured by confirming the surface tension when a platinum plate is wetted with the composition in an environment of 25°C using an automatic surface tensiometer CBVP-Z (manufactured by Kyowa Interface Science, Co., Ltd.).

The treatment liquid composition is obtained by mixing the components described above in an arbitrary order and, as necessary, carrying out filtration or the like to remove impurities. As a method of mixing each component, a method of sequentially adding materials to a container equipped with a stirring device such as a mechanical stirrer and a magnetic stirrer, and performing stirring and mixing is suitably used. As a filtration method, centrifugal filtration, filter filtration, and the like can be performed as necessary.

### 1.7. Action and Effect

According to the ink jet treatment liquid composition for pigment textile printing according to the present embodiment, as a result of applying the organopolysiloxane to the image, the color developing properties (OD value) of the image to be formed by the ink jet ink composition can be enhanced. It is considered that one reason for this is that the refractive index of the organopolysiloxane is low, the light incident on the image is easily scattered and dispersed by the organopolysiloxane, and the regular reflection is less likely to occur.

On the other hand, when the treatment liquid composition containing a large amount of organopolysiloxane is applied to ink jet, there is a concern that the ejection stability (intermittent printing stability) may be decreased due to layer separation or dispersion breakage of the organopolysiloxane in the treatment liquid caused by evaporation of moisture.

In contrast, favorable ejection stability can be obtained by using a relatively hydrophobic water-soluble organic solvent having an SP value of 12.5 or less in the treatment liquid composition. It is presumed that one reason for this is that the water-soluble organic solvent having relatively high hydrophobicity can stabilize the state of presence of the organopolysiloxane in the treatment liquid.

In general, in order to improve intermittent printing stability, a hydrophilic solvent (moisturizer) having a high SP value such as glycerin for suppressing moisture evaporation is often used, but in the system containing the organopolysiloxane, it is considered that the ejection stability cannot be always improved simply by blending a hydrophilic moisturizer. Therefore, the treatment liquid composition obtains favorable ejection stability by using a water-soluble organic solvent having a relatively high hydrophobicity, and the problem is solved based on the technical idea opposite to the general method.

### 2. Ink Jet Textile Printing Recording Method

The above-mentioned inkjet treatment liquid composition for pigment textile printing is used for pigment textile printing. Hereinafter, an ink jet textile printing recording method using the ink jet treatment liquid composition for pigment textile printing will be described.

The ink jet textile printing recording method according to the present embodiment includes an ink attachment step of attaching an inkjet ink composition containing a pigment and water to a fabric by an ink jet method, and a treatment liquid attachment step of attaching the ink jet treatment liquid composition for pigment textile printing to the fabric by an ink jet method, after the ink attachment step.

### 2.1. Ink Attachment Step

The ink attachment step is a step of attaching an ink jet ink composition to a fabric. Hereinafter, the ink jet ink composition will be described. The method of attachment to the fabric will be described later.

The ink jet ink composition may be an aqueous ink. The aqueous ink may contain, for example, a solvent component that can evaporate, in addition to water. Further, the aqueous ink may be an aqueous resin ink containing a resin. With such an ink, recording is performed by drying and evaporating the solvent component from the ink attached to the fabric and leaving a component such as a coloring material on the fabric.

### 2.1.1. Ink Jet Ink Composition

The ink jet ink composition is used for pigment textile printing. The ink jet ink composition contains at least a pigment and resin particles.

### 2.1.1. (1) Pigment

The ink jet ink composition is a so-called color ink which contains a pigment. Examples of the pigment contained in the ink jet ink composition include color pigments such as cyan, yellow, magenta, and black, and special color pigments such as white and pearl.

The pigment may be a mixture. The pigment is excellent in storage stability such as light resistance, weather resistance, and gas resistance, and is preferably an organic pigment from that viewpoint.

Specifically, as the pigment, azo pigments such as insoluble azo pigments, condensed azo pigments, azo lakes, and chelated azo pigments, polycyclic pigments such as phthalocyanine pigments, perylene and perinone pigments, anthraquinone pigments, quinacridone pigments, dioxane pigments, thioindigo pigments, isoindolinone pigments, and quinophthalone pigments, dye chelates, dye lakes, nitro pigments, nitroso pigments, aniline black, daylight fluorescent pigments, carbon black, and the like can be used. These pigments may be used alone or in combination of two or more types thereof. Further, a white pigment, a photoluminescent pigment, or the like may be used as the pigment.

Specific examples of the pigments are not particularly limited, but examples thereof include the following.

Examples of black pigments include No. 2300, No. 900, MCF 88, No. 33, No. 40, No. 45, No. 52, MA7, MA8, MA100, and No. 2200 B (all manufactured by Mitsubishi Chemical Corporation), Raven 5750, Raven 5250, Raven 5000, Raven 3500, Raven 1255, and Raven 700 (all manufactured by Columbia Carbon Inc.), Regal 400R, Regal 330R, Regal 660R, Mogul L, Monarch 700, Monarch 800, Monarch 880, Monarch 900, Monarch 3500, Monarch 1000, Monarch 1100, Monarch 1300, and Monarch 1400 (manufactured by CABOT JAPAN K.K.), Color Black FW 1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, and Special Black 4 (all manufactured by Degussa).

Examples of yellow pigments include C.I. Pigment Yellow 1, 2, 3, 4, 5, 6, 7, 10, 11, 12, 13, 14, 16, 17, 24, 34, 35, 37, 53, 55, 65, 73, 74, 75, 81, 83, 93, 94, 95, 97, 98, 99, 108, 109, 110, 113, 114, 117, 120, 124, 128, 129, 133, 138, 139, 147, 151, 153, 154, 167, 172, and 180.

Examples of magenta pigments include C.I. Pigment Red 1, 2, 3, 4, 5, 6, 7, 8, 9, 10, 11, 12, 14, 15, 16, 17, 18, 19, 21, 22, 23, 30, 31, 32, 37, 38, 40, 41, 42, 48 (Ca), 48 (Mn), 57 (Ca), 57:1, 88, 112, 114, 122, 123, 144, 146, 149, 150, 166, 168, 170, 171, 175, 176, 177, 178, 179, 184, 185, 187, 202, 209, 219, 224, 245, or C.I. Pigment Violet 19, 23, 32, 33, 36, 38, 43, and 50.

Examples of cyan pigments include C.I. Pigment Blue 1, 2, 3, 15, 15: 1, 15: 2, 15: 3, 15: 34, 15: 4, 16, 18, 22, 25, 60, 65, and 66, and C.I. Bat blue 4 and 60.

In addition, pigments other than the magenta, cyan, and yellow pigments are not particularly limited and examples thereof include C.I. Pigment Green 7, 10, C.I. Pigment Brown 3, 5, 25, 26, and C.I. Pigment Orange 1, 2, 5, 7, 13, 14, 15, 16, 24, 34, 36, 38, 40, 43, and 63.

The pearl pigment is not particularly limited and examples thereof include pigments having pearl luster or interference luster such as titanium dioxide coated mica, fish scale foil, and bismuth acid chloride.

The metallic pigment is not particularly limited and examples thereof include particles formed of aluminum, silver, gold, platinum, nickel, chromium, tin, zinc, indium, titanium, copper, and the like, alone or in alloys.

Examples of the white pigment include metal compounds such as metal oxide, barium sulfate, and calcium carbonate. Examples of the metal oxide include titanium dioxide, zinc oxide, silica, alumina, magnesium oxide, and the like. In addition, particles having a hollow structure may be used as the white pigment, and as the particles having a hollow structure, known particles can be used.

In addition, when considering the mechanism by which the color developing properties of an image is enhanced, it is considered that a more remarkable effect can be obtained for a dark color image. Therefore, it is considered that the effect of making color developing properties favorable is high when the pigment contained in the ink jet ink composition is black, cyan, magenta, and the like. From this viewpoint, it is considered that a more remarkable effect can be obtained particularly when the pigment contained in the ink jet ink composition is black.

Suitably, the pigment can be stably dispersed in a dispersion medium, and for this purpose, a dispersant may be used to disperse the pigment. As the dispersant, there is provided a resin dispersant and the like, and the dispersant is selected from those that can improve dispersion stability of the pigment in the ink jet ink composition. In addition, the pigment may also be used as a self-dispersible pigment by, for example, oxidizing or sulfonating the surface of the pigment with ozone, hypochlorous acid, fuming sulfuric acid, or the like to modify the surface of the pigment particle.

Examples of the resin dispersant (dispersant resin) include (meth)acrylic resins such as poly(meth)acrylic acid, (meth)acrylic acid-acrylonitrile copolymers, (meth)acrylic acid-(meth)acrylic acid ester copolymers, vinyl acetate-(meth)acrylic acid ester copolymers, vinyl acetate-(meth)acrylic acid copolymers, and vinyl naphthalene-(meth)acrylic acid copolymers, and salts thereof; styrene resins such as styrene-(meth)acrylic acid copolymers, styrene-(meth)acrylic acid-(meth)acrylic acid ester copolymers, styrene-α-methylstyrene-(meth)acrylic acid copolymers, styrene-α-methylstyrene-(meth)acrylic acid-(meth)acrylic acid ester copolymers, styrene-maleic acid copolymers, and styrene-maleic acid anhydride copolymers, and salts thereof; urethane resins, which are polymer compounds (resins) having a urethane bond formed when an isocyanate group reacts with a hydroxyl group, and which may be linear and/or branched regardless of a crosslinked structure, and salts thereof; polyvinyl alcohols; vinyl naphthalene-maleic acid copolymers and salts thereof; vinyl acetate-maleic acid ester copolymers and salts thereof; and water-soluble resins such as vinyl acetate-crotonic acid copolymers and salts thereof. Among these, a copolymer of a monomer having a hydrophobic functional group and a monomer having a hydrophilic functional group, and a polymer formed of monomers having both a hydrophobic functional group and a hydrophilic functional group are preferable. As the form of the copolymer, any form of a random copolymer, a block copolymer, an alternating copolymer, and a graft copolymer can be used.

Examples of commercially available products of the styrene resin dispersant include X-200, X-1, X-205, X-220, and X-228 (manufactured by SEIKO PMC CORPORATION), NOPCOSPERSE (registered trademark) 6100 and 6110 (manufactured by SAN NOPCO LIMITED), JONCRYL 67, 586, 611, 678, 680, 682, and 819 (manufactured by BASF SE), DISPER BYK-190 (manufactured by BYK Japan KK.), and N-EA137, N-EA157, N-EA167, N-EA177, N-EA197D, N-EA207D, and E-EN10 (manufactured by DKS Co., Ltd.).

In addition, examples of commercially available products of the acrylic resin dispersants include BYK-187, BYK-190, BYK-191, BYK-194N, and BYK-199 (manufactured by BYK Japan KK.), and Aron A-210, A6114, AS-1100, AS-1800, A-30SL, A-7250, and CL-2 (manufactured by TOAGOSEI CO., LTD.).

Further, examples of commercially available products of the urethane resin dispersant include BYK-182, BYK-183, BYK-184, and BYK-185 (manufactured by BYK Japan KK.), TEGO Dispers 710 (manufactured by Evonik Tego Chemi GmbH), and Borchi (registered trademark) Gen 1350 (manufactured by OMG Borchers GmbH).

These dispersants may be used alone or in combination of two or more types thereof. The total content of the dispersant is preferably 0.1 parts by mass or more and 30 parts by mass or less, more preferably 0.5 parts by mass or more and 25 parts by mass or less, even more preferably 1 part by mass or more and 20 parts by mass or less, and still even more preferably 1.5 parts by mass or more and 15 parts by mass or less, with respect to 50 parts by mass of the pigment. When the content of the dispersant is 0.1 parts by mass or more with respect to 50 parts by mass of the pigment, the dispersion stability of the pigment can be further enhanced. In addition, when the content of the dispersant is 30 parts by mass or less with respect to 50 parts by mass of the pigment, the viscosity of the obtained dispersion can be suppressed to be small.

By using such a resin dispersant as the dispersant, the dispersion and aggregation of the pigment are further improved, and an image having more favorable dispersion stability and more favorable image quality can be obtained.

The dispersant resin preferably has an acid value, and the acid value is preferably 5 mg KOH/g or more, more preferably 10 to 200 mg KOH/g, and even more preferably 15 to 150 mg KOH/g. Further, an acid value of 20 to 100 mg KOH/g is preferable, and an acid value of 25 to 70 mg KOH/g is more preferable.

The acid value can be measured by the neutralization titration method in accordance with JIS K 0070. As a titration device, for example, "AT610" manufactured by Kyoto Electronics Manufacturing Co., Ltd. can be used.

The content of the pigment is preferably 0.3% by mass or more and 20% by mass or less, and more preferably 0.5% by mass or more and 15% by mass or less with respect to the total mass of the ink jet ink composition. Further, the content is preferably 1% by mass or more and 10% by mass or less, and more preferably 2% by mass or more and 7% by mass or less.

### 2.1.1. (2) Resin Particle

The ink jet ink composition contains resin particles. The ink jet ink composition may be a colored aqueous resin ink. The resin particles can further improve the adhesion of an image due to the ink jet ink composition attached to the fabric. As the anionic resin particles, for example, there may be mentioned resin particles having anionic properties among resin particles formed of a urethane resin, an acrylic resin (including styrene-acrylic resin), a fluorene resin, a polyolefin resin, a rosin-modified resin, a terpene resin, a polyester resin, a polyamide resin, an epoxy resin, a vinyl chloride resin, a vinyl chloride-vinyl acetate copolymer, an ethylene vinyl acetate resin, and the like. Among these, a urethane resin, an acrylic resin, a polyolefin resin, and a polyester resin are preferable. These resin particles are often handled in the form of an emulsion, but may be in the form of powder. In addition, the resin particles can be used alone or in combination of two or more types thereof.

Among these, the resin particle is more preferably urethane resin. When urethane resin is selected, an image having more favorable rubbing fastness can be formed.

Urethane resin is a generic term for resins having a urethane bond. For the urethane resin, a polyether-type urethane resin including an ether bond in the main chain, a polyester-type urethane resin including an ester bond in the main chain, a polycarbonate-type urethane resin including a carbonate bond in the main chain, and the like, in addition to a urethane bond, may be used. In addition, as the urethane resin, a commercially available product may be used, and for example, commercially available products such as SUPERFLEX 460, 460s, 840, and E-4000 (trade names, manufactured by DKS Co., Ltd.), RESAMINE D-1060, D-2020, D-4080, D-4200, D-6300, and D-6455 (trade names, manufactured by Dainichiseika Color & Chemicals Mfg. Co., Ltd.), Takelac WS-6021, and W-512-A-6 (trade names, manufactured by Mitsui Chemicals & SKC Polyurethanes Inc.), Sancure 2710 (trade name, manufactured by Lubrizol Corporation), PERMARIN UA-150 (trade name, manufactured by Sanyo Chemical Industries Ltd.), ETERNACOLL UW series, for example, UW-1527 or the like, (manufactured by UBE Corporation), and the like may be used.

Acrylic resin is a generic term for polymers obtained by polymerizing at least acrylic monomers such as (meth)acrylic acid and (meth)acrylic acid ester as one component, and examples thereof include a resin obtained from an acrylic monomer and a copolymer of an acrylic monomer and other monomers. Examples thereof include an acrylic-vinyl resin which is a copolymer of an acrylic monomer and a vinyl monomer. In addition, examples of the vinyl monomer include styrene.

As the acrylic monomer, acrylamide, acrylonitrile, and the like can also be used. For the resin emulsion using acrylic resin as a raw material, a commercially available product may be used, and for example, any resin emulsion may be selected and used from FK-854 (trade name, manufactured by CHIRIKA Co., Ltd.), Mowinyl 952B, 718A, and 6760 (trade names, manufactured by Japan Coating Resin Corporation), Nipol LX852 and LX874 (trade names, manufactured by Zeon Corporation), and the like.

Incidentally, in the present specification, the acrylic resin may be a styrene-acrylic resin described below. In addition, in the present specification, the notation of "(meth)acrylic" means at least one of acrylic and methacrylic.

The styrene-acrylic resin is a copolymer obtained from a styrene monomer and a (meth)acrylic monomer, and examples thereof include styrene-acrylic acid copolymers, styrene-methacrylic acid copolymers, styrene-methacrylic acid-acrylate copolymers, styrene-α-methylstyrene-acrylic acid copolymers, and styrene-α-methylstyrene-acrylic acid-acrylate copolymers. As the styrene acrylic resin, a commercially available product may be used, and for example, Joncryl 62J, 7100, 390, 711, 511, 7001, 632, 741, 450, 840, 74J, HRC-1645J, 734, 852, 7600, 775, 537J, 1535, PDX-7630A, 352J, 352D, PDX-7145, 538J, 7640, 7641, 631, 790, 780, and 7610 (trade names, manufactured by BASF SE), Mowinyl 966A and 975N (trade names, manufactured by Japan Coating Resin Corporation), VINYBLAN 2586 (manufactured by Nissin Chemical Industry Co., Ltd.), and the like may be used.

The polyolefin resin has an olefin such as ethylene, propylene, or butylene in the structural skeleton, and known ones can be appropriately selected and used. As the olefin resin, a commercially available product can be used, for example, ARROWBASE CB-1200, CD-1200 (trade name, manufactured by Unitika Ltd.), and the like may be used.

In addition, the resin particles may be supplied in the form of an emulsion, and as examples of commercially available products of such a resin emulsion include Microgel E-1002 and E-5002 (trade names, manufactured by Nippon Paint Co. Ltd., styrene-acrylic resin emulsion), VONCOAT 4001 (trade name, manufactured by DIC Corporation, acrylic resin emulsion), VONCOAT 5454 (trade name, manufactured by DIC Corporation, styrene-acrylic resin emulsion), Polysol AM-710, AM-920, AM-2300, AP-4735, AT-860, and PSASE-4210E (acrylic resin emulsion), Polysol AP-7020 (styrene acrylic resin emulsion), Polysol SH-502 (vinyl acetate resin emulsion), Polysol AD-13, AD-2, AD-10, AD-96, AD-17, and AD-70 (ethylene vinyl acetate resin emulsion), Polysol PSASE-6010 (ethylene vinyl acetate resin emulsion) (trade names, manufactured by Showa Denko KK), Polysol SAE1014 (trade name, styrene-acrylic resin emulsion, manufactured by Zeon Corporation), Saivinol SK-200 (trade name, acrylic resin emulsion, manufactured by Saiden Chemical Industry Co.,Ltd.), AE-120A (trade name, manufactured by JSR Corporation, acrylic resin emulsion), AE373D (trade name, manufactured by Emulsion Technology Co., Ltd., carboxy modified styrene acrylic resin emulsion), Seikadyne 1900W (trade name, manufactured by Dainichiseika Color & Chemicals Mfg. Co., Ltd., ethylene vinyl acetate resin emulsion), VINYBLAN 2682 (acrylic resin emulsion), VINYBLAN 2886 (vinyl acetate acrylic resin emulsion), VINYBLAN 5202 (acetic acid acrylic resin emulsion) (trade names, manufactured by Nisshin Chemical Industry Co., Ltd.), Elitel KA-5071S, KT-8803, KT-9204, KT-8701, KT-8904, and KT-0507 (trade names, manufactured by Unitika Ltd., polyester resin emulsion), Hi-Tech SN-2002 (trade name, manufactured by TOHO CHEMICAL INDUSTRY Co., Ltd., polyester resin emulsion), TAKELAK W-6020, W-635, W-6061, W-605, W-635, and W-6021 (trade names, manufactured by Mitsui Chemicals & SKC Polyurethanes Inc., urethane resin emulsion), SUPERFLEX 870, 800, 150, 420, 460, 470, 610, and 700 (trade names, manufactured by DKS Co., Ltd., urethane resin emulsion), PERMARIN UA-150 (manufactured by Sanyo Chemical Industries, Ltd., urethane resin emulsion), Sancure 2710 (manufactured by Japanese Lubrizol Corporation, urethane resin emulsion), NeoRez R-9660, R-9637, and R-940 (manufactured by Kusumoto Chemicals, Ltd., urethane resin emulsion), ADEKA BONTIGHTER HUX-380 and 290K (manufactured by ADEKA Corporation, urethane resin emulsion), Mowinyl 966A and Mowinyl 7320 (manufactured by Japan Coating Resin Corporation), Joncryl 7100, 390, 711, 511, 7001, 632, 741, 450, 840, 74J, HRC-1645J, 734, 852, 7600, 775, 537J, 1535, PDX-7630A, 352J, 352D, PDX-7145, 538J, 7640, 7641, 631, 790, 780, and 7610 (manufactured by BASF SE), NK binder R-5HN (manufactured by Shin-Nakamura Chemical Co., Ltd.), HYDRAN WLS-210 (non-crosslinkable polyurethane: manufactured by DIC Corporation), and Joncryl 7610 (manufactured by BASF SE). Any of these may be selected and used.

The glass transition temperature (Tg) of the resin particles is preferably -50°C or higher and 200°C or lower, more preferably 0°C or higher and 150°C or lower, and even more preferably 50°C or higher and 100°C or lower. Further, the glass transition temperature is particularly preferably 50°C or higher and 80°C or lower. When the glass transition temperature (Tg) of the resin particles is within the above range, the resin particles tend to be excellent in durability and clogging resistance. The glass transition temperature is measured, for example, using a differential scanning calorimeter "DSC7000", manufactured by Hitachi High-Tech Science Corporation, in accordance with JIS K 7121 (Testing Methods for Transition Temperatures of Plastics).

The volume average particle diameter of the resin particles is preferably 10 nm or more and 300 nm or less, more preferably 30 nm or more and 300 nm or less, even more preferably 30 nm or more and 250 nm or less, and particularly preferably 40 nm or more and 220 nm or less. The volume average particle diameter can be measured by the method described above.

The acid value of the resin of the resin particles is preferably 50 mg KOH/g or less, more preferably 30 mg KOH/g or less, even more preferably 20 mg KOH/g or less, and still even more preferably 10 mg KOH/g or less. Further, the lower limit of the acid value is 0 mg KOH/g or more, preferably 5 mg KOH/g or more, and more preferably 10 mg KOH/g or more. This case is preferable since the image quality and the like are excellent. The acid value can be measured by the method described above.

The content of the resin particles in the ink jet ink composition with respect to the total mass of the inkjet ink composition is 0.1% by mass or more and 20% by mass or less, preferably 1% by mass or more and 15% by mass or less, and more preferably 3% by mass or more and 7% by mass or less, as a solid content.

### 2.1.1. (3) Other Components

The ink jet ink composition may contain the following components.

### Organic Solvent

The inkjet ink composition used in the recording method according to the present embodiment may contain an organic solvent. The organic solvent is preferably water-soluble. One of the functions of the organic solvent is to improve the wettability of the ink jet ink composition with respect to a fabric or to enhance the moisture retention properties of the ink jet ink composition. The organic solvent can also function as a penetrant.

Examples of the organic solvent include esters, alkylene glycol ethers, cyclic esters, nitrogen-containing solvents, and polyhydric alcohols. Examples of the nitrogen-containing solvents include cyclic amides and acyclic amides. Examples of the acyclic amides include alkoxyalkylamides.

Examples of the esters include glycol monoacetates such as ethylene glycol monomethyl ether acetate, ethylene glycol monoethyl ether acetate, and ethylene glycol monobutyl ether acetate, and glycol diesters such as ethylene glycol diacetate, diethylene glycol diacetate, and propylene glycol diacetate.

The alkylene glycol ethers may be alkylene glycol monoethers or diethers, and alkyl ethers are preferable. Specific examples thereof include alkylene glycol monoalkyl ethers such as ethylene glycol monomethyl ether, ethylene glycol monoethyl ether, ethylene glycol monoisopropyl ether, ethylene glycol monobutyl ether, and diethylene glycol monomethyl ether, and alkylene glycol dialkyl ethers such as ethylene glycol dimethyl ether, ethylene glycol diethyl ether, ethylene glycol dibutyl ether, diethylene glycol dimethyl ether, and diethylene glycol diethyl ether.

Examples of the cyclic esters include cyclic esters (lactones) such as β-propiolactone, γ-butyrolactone, δ-valerolactone, ε-caprolactone, and β-butyrolactone, and compounds in which a hydrogen of a methylene group adjacent to a carbonyl group thereof is substituted with an alkyl group having 1 to 4 carbon atoms.

Examples of the alkoxyalkylamides include 3-methoxy-N,N-dimethylpropionamide, 3-methoxy-N,N-diethylpropionamide, 3-methoxy-N,N-methylethylpropionamide, 3-ethoxy-N,N-dimethylpropionamide, 3-ethoxy-N,N-diethylpropionamide, 3-ethoxy-N,N-methylethylpropionamide, 3-n-butoxy-N,N-dimethylpropionamide, 3-n-butoxy-N,N-diethylpropionamide, and 3-n-butoxy-N,N-methylethylpropiona m ide.

Examples of the cyclic amides include lactams, and examples thereof include pyrrolidones such as 2-pyrrolidone, 1-methyl-2-pyrrolidone, 1-ethyl-2-pyrrolidone, 1-propyl-2-pyrrolidone, and 1-butyl-2-pyrrolidone.

In addition, it is also preferable to use compounds represented by Formula (1) as the alkoxyalkylamides.

R¹-O-CH₂CH₂-(C=O)-NR²R³ ... (1)

In Formula (1), R¹ represents an alkyl group having 1 or more and 4 or less carbon atoms, and R² and R³ each independently represent a methyl group or an ethyl group. The "alkyl group having 1 or more and 4 or less carbon atoms" may be a linear or branched alkyl group, and examples thereof include a methyl group, an ethyl group, an n-propyl group, an isopropyl group, an n-butyl group, a sec-butyl group, an iso-butyl group, and a tert-butyl group. The compounds represented by Formula (1) may be used alone or as a mixture of two or more types thereof.

Examples of the function of the nitrogen-containing solvent include enhancing the surface dryness and fixability of the ink jet ink composition attached to the fabric.

The content of the nitrogen-containing solvent is not particularly limited with respect to the total mass of the ink jet ink composition, and is about 5% by mass or more and 50% by mass or less, and preferably 10% by mass or more and 30% by mass or less. When the content of the nitrogen-containing solvent is within the above range, the fixability and surface dryness of the image (particularly, the surface dryness when an image is recorded under an environment of high temperature and high humidity) can be further improved in some cases.

Examples of the polyhydric alcohols include 1,2-alkanediol (for example, alkanediols such as ethylene glycol, propylene glycol (alias: propane-1,2-diol), 1,2-butanediol, 1,2-pentanediol, 1,2-hexanediol, 1,2-heptanediol, and 1,2-octanediol), and polyhydric alcohols (polyols) excluding the 1,2-alkanediol (for example, diethylene glycol, dipropylene glycol, 1,3-propanediol, 1,3-butanediol (alias: 1,3-butylene glycol), 1,4-butanediol, 1,5-pentanediol, 1,6-hexanediol, 2-ethyl-2-methyl-1,3-propanediol, 2-methyl-2-propyl-1,3-propanediol, 2-methyl-1,3-propanediol, 2,2-dimethyl-1,3-propanediol, 3-methyl-1,3-butanediol, 2-ethyl-1,3-hexanediol, 3-methyl-1,5-pentanediol, 2-methylpentane-2,4-diol, trimethylol propane, and glycerin).

The polyhydric alcohols can be divided into alkanediols and polyols. The alkanediols are diols of an alkane having 5 or more carbon atoms. The number of carbon atoms of the alkane is preferably 5 to 15, more preferably 6 to 10, and even more preferably 6 to 8. 1,2-alkanediol is preferable.

The polyols are polyols of alkane having 4 or less carbon atoms or intermolecular condensates of hydroxyl groups of polyols of alkane having 4 or less carbon atoms. The number of carbon atoms of the alkane is preferably 2 to 3. The number of the hydroxyl groups in the molecule of the polyols is 2 or more, preferably 5 or less, and more preferably 3 or less. When the polyols are the intermolecular condensates described above, the number of intermolecular condensates is 2 or more, preferably 4 or less, and more preferably 3 or less. The polyhydric alcohols may be used alone or as a mixture of two or more types thereof.

The alkanediols and polyols can mainly function as a penetrating solvent and/or a moisturizing solvent. However, the alkanediols tend to have strong properties as the penetrating solvent, and polyols tend to have strong properties as the moisturizing solvent.

When the inkjet ink composition contains an organic solvent, the organic solvent may be used alone or in combination of two or more types thereof. In addition, the total content of the organic solvent is, for example, 5% by mass or more and 50% by mass or less, preferably 10% by mass or more and 45% by mass or less, more preferably 15% by mass or more and 40% by mass or less, and even more preferably 20% by mass or more and 40% by mass or less, with respect to the total mass of the ink jet ink composition. When the content of the organic solvent is within the above range, the balance between wet spreadability and dryness is further improved, and an image with high image quality is easily formed.

### Surfactant

The ink jet ink composition may contain a surfactant. The surfactant has a function of adjusting the surface tension of the ink jet ink composition and adjusting, for example, the wettability with the fabric. Among the surfactants, for example, an acetylene glycol-based surfactant, a silicone-based surfactant, and a fluorine-based surfactant can be preferably used.

The acetylene glycol-based surfactant is not particularly limited, and examples thereof include SURFYNOL 104, 104E, 104H, 104A, 104BC, 104DPM, 104PA, 104PG-50, 104S, 420, 440, 465, 485, SE, SE-F, 504, 61, DF37, CT111, CT121, CT131, CT136, TG, GA, and DF110D (all trade names, manufactured by Air Products & Chemicals. Inc.), OLFINE B, Y, P, A, STG, SPC, E1004, E1010, PD-001, PD-002W, PD-003, PD-004, EXP. 4001, EXP. 4036, EXP. 4051, AF-103, AF-104, AK-02, SK-14, and AE-3 (all trade names, manufactured by Nissin Chemical Industry Co., Ltd.), and ACETYLENOL E00, E00P, E40, and E100 (all trade names, manufactured by Kawaken Fine Chemicals Co., Ltd.).

The silicone-based surfactant is not particularly limited, and examples thereof preferably include a polysiloxane-based compound. The polysiloxane-based compound is not particularly limited, and examples thereof include a polyether-modified organosiloxane. Examples of commercially available products of the polyether-modified organosiloxane include BYK-306, BYK-307, BYK-333, BYK-341, BYK-345, BYK-346, and BYK-348 (all trade names, manufactured by BYK Japan KK.), KF-351A, KF-352A, KF-353, KF-354L, KF-355A, KF-615A, KF-945, KF-640, KF-642, KF-643, KF-6020, X-22-4515, KF-6011, KF-6012, KF-6015, and KF-6017 (all trade names, manufactured by Shin-Etsu Chemical Co., Ltd.), and SILFACE SAG002, 005, 503A, 008 (all trade names, manufactured by Nissin Chemical Industry Co., Ltd.).

As the fluorine-based surfactant, a fluorine-modified polymer is preferably used, and specific examples thereof include BYK-3440 (manufactured by BYK Japan KK.), SURFLON S-241, S-242, and S-243 (all trade names, manufactured by AGC SEIMI CHEMICAL CO., LTD.), and FTERGENT 215M (manufactured by NEOS COMPANY LIMITED).

When the ink jet ink composition contains a surfactant, a plurality of types of surfactants may be contained. When the inkjet ink composition contains the surfactant, the content thereof may be 0.1% by mass or more and 2% by mass or less, preferably 0.4% by mass or more and 1.5% by mass or less, and more preferably 0.5% by mass or more and 1.0% by mass or less, with respect to the total mass of the ink jet ink composition.

### Wax

The ink jet ink composition may contain a wax. Since the wax has a function of imparting smoothness to an image due to the inkjet ink composition, the peeling of the image due to the ink jet ink composition can be reduced.

Examples of the components constituting the wax include plant or animal waxes such as carnauba wax, candelilla wax, beeswax, rice wax, and lanolin; petrolatum waxes, such as paraffin wax, microcrystalline wax, polyethylene wax, oxidized polyethylene wax, and petrolatum; mineral waxes, such as montan wax and ozokerite; synthetic waxes such as carbon wax, Hoechst wax, polyolefin wax, and stearic acid amide; and emulsions of natural synthetic waxes or compounded waxes such as an α-olefin maleic anhydride copolymer. These waxes can be used alone or a mixture of a plurality of types thereof may be used. Among these, from a viewpoint of obtaining more excellent in the effect of enhancing the fixability to a soft packaging film to be described later, it is preferable to use the polyolefin wax (in particular, polyethylene wax and polypropylene wax) and the paraffin wax.

As the wax, a commercially available product can be used as it is, and examples thereof include NOPCOTE PEM-17 (trade name, manufactured by SAN NOPCO LIMITED), CHEMIPEARL W4005 (trade name, manufactured by Mitsui Chemicals, Inc.), and AQUACER 515, 539, and 593 (all trade names, manufactured by BYK Japan KK.).

The wax may be supplied in the form of an emulsion or suspension. When the wax is used, the content thereof is preferably 0.1% by mass or more and 10% by mass or less, more preferably 0.5% by mass or more and 5% by mass or less, and even more preferably 0.5% by mass or more and 2% by mass or less, with respect to the total mass of the ink jet ink composition, in terms of solid content. When the content of the wax is within the above range, the function of the wax can be favorably exhibited.

### Additive

The ink jet ink composition may contain ureas, amines, saccharides and the like as additives. Examples of ureas include urea, ethyleneurea, tetramethylurea, thiourea, and 1,3-dimethyl-2-imidazolidinone, and betaines (such as trimethylglycine, triethylglycine, tripropylglycine, triisopropylglycine, N,N,N-trimethylalanine, N,N,N-triethylalanine, N,N,N-triisopropylalanine, N,N,N-trimethyl methyl alanine, carnitine, and acetyl carnitine).

Examples of the amines include diethanolamine, triethanolamine, and triisopropanolamine. The ureas or the amines may function as a pH adjuster.

Examples of the saccharides include glucose, mannose, fructose, ribose, xylose, arabinose, galactose, aldonic acid, glucitol (sorbitol), maltose, cellobiose, lactose, sucrose, trehalose, and maltotriose.

### pH Adjuster

A pH adjuster can be added to the ink jet ink composition of the present embodiment in order to adjust the pH. The pH adjuster is not particularly limited, and examples thereof include an appropriate combination of acids, bases, weak acids, and weak bases. Examples of acids and bases used in such a combination include inorganic acids such as sulfuric acid, hydrochloric acid, and nitric acid, inorganic bases such as lithium hydroxide, sodium hydroxide, potassium hydroxide, dihydrogen potassium phosphate, hydrogen disodium phosphate, potassium carbonate, sodium carbonate, hydrogen sodium carbonate, and ammonia, organic bases such as triethanolamine, diethanolamine, monoethanolamine, tripropanolamine, triisopropanolamine, diisopropanolamine, and tris(hydroxymethyl)aminomethane (THAM), and organic acids such as adipic acid, citric acid, succinic acid, lactic acid, Good's buffers such as N,N-bis(2-hydroxyethyl)-2-aminoethanesulfonic acid (BES), 4-(2-hydroxyethyl)-1-piperazineethanesulfonic acid (HEPES), morpholinoethanesulfonic acid (MES), carbamoylmethyl iminobisacetic acid (ADA), piperazine-1,4-bis(2-ethanesulfonic acid) (PIPES), N-(2-acetamide)-2-aminoethanesulfonic acid (ACES), cholamine chloride, N-tris(hydroxymethyl)methyl-2-aminoethanesulfonic acid (TES), acetamide glycine, tricine, glycine amide, and bicine, a phosphate buffer solution, a citrate buffer solution, and a tris buffer solution. Further, among these, a tertiary amine such as triethanolamine or triisopropanolamine and a carboxy group-containing organic acid such as adipic acid, citric acid, succinic acid, or lactic acid are preferably contained as a part or the whole of the pH adjuster since the pH buffering effect can be more stably obtained.

### Ureas

Ureas may be used as a moisturizer of the ink jet ink composition. Specific examples of the ureas include urea, ethylene urea, tetramethylurea, thiourea, and 1,3-dimethyl-2-imidazolidinone. When the ureas are contained, the content thereof may be 1% by mass or more and 10% by mass or less with respect to the total mass of the ink jet ink composition. Saccharides

Saccharides may be used for the purpose of suppressing solidification and drying of the ink jet ink composition. Specific examples of saccharides include glucose, mannose, fructose, ribose, xylose, arabinose, galactose, aldonic acid, glucitol (sorbitol), maltose, cellobiose, lactose, sucrose, trehalose, and maltotriose.

### Chelating Agent

A chelating agent may be used for the purpose of removing unnecessary ions in the ink jet ink composition. Examples of the chelating agent include ethylenediaminetetraacetic acid and salts thereof (such as ethylenediaminetetraacetic acid dihydrogen disodium salt, ethylene diamine nitrilotriacetate, hexametaphosphate, pyrophosphate, and metaphosphate). Preservative and Fungicide

A preservative and a fungicide may be used in the inkjet ink composition. Examples of the preservative and the fungicide include sodium benzoate, sodium pentachlorophenolate, sodium 2-pyridinethiol-1-oxide, sodium sorbate, sodium dehydroacetate, PROXEL CRL, PROXEL BDN, PROXEL GXL, PROXEL XL-2, PROXEL IB, and PROXEL TN (trade names, all manufactured by LONZA KK.), and 4-chloro-3-methylphenol (such as PREVENTOL CMK manufactured by Bayer AG).

### Rust Inhibitor

A rust inhibitor may be used in the ink jet ink composition. Preferable examples of the rust inhibitor include benzotriazole, acidic sulfite, sodium thiosulfate, ammonium thioglycolic acid, diisopropylammonium nitrite, pentaerythritol tetranitrate, and dicyclohexylammonium nitrite. Among these, benzotriazole is particularly suitable.

### Others

The inkjet ink composition used in the recording method according to the present embodiment may further contain components such a viscosity adjusting agent, an antioxidant, an antifungal agent, an oxygen absorber, and a dissolution aid, as necessary.

### 2.1.1. (4) Physical properties and Production of Ink Jet Ink Composition

When the ink jet ink composition is attached to the fabric by an ink jet method, the viscosity of the ink jet ink composition at 20°C is preferably 1.5 mPa·s or more and 15 mPa·s or less, more preferably 1.5 mPa·s or more and 7 mPa·s or less, and even more preferably 1.5 mPa·s or more and 5.5 mPa·s or less. When the ink jet ink composition is attached to the fabric by the ink jet method, it is easy to efficiently form a predetermined image in the fabric.

The surface tension of the ink jet ink composition at 25°C is 40 mN/m or less, preferably 38 mN/m or less, more preferably 35 mN/m or less, and even more preferably 30 mN/m or less from the viewpoint of ensuring appropriate wet spreadability to the fabric. In addition, the surface tension is preferably 20 mN/m or more, and more preferably 25 mN/m or more.

The surface tension can be measured by confirming the surface tension when a platinum plate is wetted with the composition in an environment of 25°C using an automatic surface tensiometer CBVP-Z (manufactured by Kyowa Interface Science, Co., Ltd.).

The ink jet ink composition is obtained by mixing the components described above in an arbitrary order and, as necessary, carrying out filtration or the like to remove impurities. As a method of mixing each component, a method of sequentially adding materials to a container equipped with a stirring device such as a mechanical stirrer and a magnetic stirrer, and performing stirring and mixing is suitably used. As a filtration method, centrifugal filtration, filter filtration, and the like can be performed as necessary.

### 2.1.2. Method of Attaching Ink Jet Ink Composition to Fabric

The ink attachment step may be performed by any method provided that an ink jet method having a form in which the ink jet ink composition is attached to the fabric while an inkjet head scans the fabric is used. In the inkjet method, main scanning may be performed a plurality of times for recording by moving the ink jet head in a direction perpendicular to a transport direction of the fabric.

The attachment amount of the inkjet ink composition in the ink attachment step is preferably 5.0 (mg/inch²) or more. Further, the attachment amount of the colored ink composition is preferably 7.0 (mg/inch²) or more, more preferably 9.0 (mg/inch²) or more, even more preferably 10.0 (mg/inch²) or more, yet even more preferably 13.0 (mg/inch²) or more, and still even more preferably 15.0 (mg/inch²) or more. In this manner, a colored image having more favorable color developing properties can be obtained.

Further, the upper limit is preferably 50.0 (mg/inch²) or less, more preferably 40.0 (mg/inch²) or less, and even more preferably 25.0 (mg/inch²) or less.

The attachment amount of the ink jet ink composition described above is an amount in the recording region in which the treatment liquid and the ink jet ink composition are attached to the recording region in an overlapping manner in the recording method of the present embodiment. In addition, the maximum attachment amount of the inkjet ink composition in the region may be within the above range and this case is preferable.

### 2.2. Treatment Liquid Attachment Step

The ink jet textile printing recording method according to the present embodiment has a treatment liquid attachment step of attaching the ink jet treatment liquid composition for pigment textile printing to the fabric by an ink jet method, after the ink attachment step.

The treatment liquid attachment step is a step of attaching the ink jet treatment liquid composition for pigment textile printing to the fabric. Hereinafter, the method of attachment to the fabric will be described.

The treatment liquid attachment step may be performed by any method provided that an ink jet method having a form in which the ink jet treatment liquid composition for pigment textile printing is attached to the fabric while an ink jet head scans the fabric is used. In the ink jet method, main scanning may be performed a plurality of times for recording by moving the ink jet head in a direction perpendicular to a transport direction of the fabric. Although the details will be described later, the ink jet ink composition and the treatment liquid may be applied such that after the ink is attached, the treatment liquid is attached to the same scanning region of the fabric by the same main scanning (alternate application). The ink jet ink composition and the treatment liquid may be applied such that after the ink is attached, the treatment liquid is attached by different main scanning (treatment liquid post-application). It is preferable that the ink jet ink composition and the treatment liquid are applied such that after the ink is attached, the treatment liquid is attached by different main scanning (treatment liquid post-application).

### 2.3. Order of Steps

The treatment liquid attachment step is performed after the ink attachment step. That is, a coating film is formed by the ink jet treatment liquid composition for pigment textile printing on an image formed by the ink jet ink composition formed in the fabric by the ink attachment step.

The timing at which the treatment liquid attachment step is performed may be after the ink attachment step. For example, the ink jet treatment liquid composition for pigment textile printing may be attached onto the ink jet ink composition by the same main scanning as the main scanning for attaching the ink jet ink composition to the fabric, or the ink jet treatment liquid composition for pigment textile printing may be attached onto the ink jet ink composition by the subsequent main scanning different from the main scanning for attaching the ink jet ink composition to the fabric.

However, when the ink jet treatment liquid composition for pigment textile printing is attached onto the ink jet ink composition in the subsequent main scanning different from the main scanning for attaching ink jet ink composition to the fabric, the ink jet ink composition may be dried and the inkjet treatment liquid composition for pigment textile printing and the ink jet ink composition are less likely to be mixed, and this case is preferable. In addition, in this case, the refractive index of the coating film of the ink jet treatment liquid composition for pigment textile printing is easily set to the intended level, and the color developing properties of the image is less likely to be impaired. Thus, this case is more preferable.

### 2.4. Other Steps

The ink jet textile printing recording method according to the present embodiment may include the following steps.

### 2.4.1. Pretreatment Liquid Attachment Step

The inkjet textile printing recording method may include a pretreatment liquid attachment step as necessary. The pretreatment liquid attachment step is a step of attaching a pretreatment liquid to the fabric. Hereinafter, the pretreatment liquid will be described.

### 2.4.1. (1) Pretreatment Liquid

The pretreatment liquid may contain an aggregating agent. The pretreatment liquid may contain an aggregating agent for aggregating the components of the ink jet ink composition. The aggregating agent has an effect of aggregating the pigment and the resin particles by reacting with the components such as the pigment included in the ink and the resin particles included in the ink. For example, such aggregation makes it possible to enhance the color development of the pigment, to enhance the fixability of the resin particles, and/or to increase the viscosity of the ink.

Although the aggregating agent is not particularly limited, examples thereof include a metal salt, an inorganic acid, an organic acid, and a cationic compound, and as the cationic compound, a cationic resin (cationic polymer), a cationic surfactant, and the like can be used. Among these, a polyvalent metal salt is preferable as the metal salt, and a cationic resin is preferable as the cationic compound. Therefore, as the aggregating agent, it is preferable to select any one of a cationic resin, an organic acid, and a polyvalent metal salt from the viewpoint of obtaining particularly excellent image quality, scratch resistance, gloss, and the like.

The metal salt is preferably a polyvalent metal salt, but it is also possible to use metal salts other than polyvalent metal salts. Among these aggregating agents, it is preferable to use at least one selected from a metal salt and an organic acid from the viewpoint of excellent reactivity with components included in the ink. In addition, among the cationic compounds, cationic resins are preferably used from the viewpoint of easy dissolution in the treatment liquid. In addition, a plurality of types of aggregating agents can be used in combination.

The polyvalent metal salt is a compound formed of a divalent or higher metal ion and an anion. Examples of the divalent or higher metal ion include ions such as calcium, magnesium, copper, nickel, zinc, barium, aluminum, titanium, strontium, chromium, cobalt, and iron. Among the metal ions constituting these polyvalent metal salts, the metal ion is preferably at least one of calcium ion and magnesium ion from the viewpoint of excellent aggregating properties of the components of the ink.

The anion constituting the polyvalent metal salt is an inorganic ion or an organic ion. That is, the polyvalent metal salt in the present disclosure is formed of an inorganic ion or an organic ion and a polyvalent metal. Examples of the inorganic ion include a chloride ion, a bromine ion, an iodine ion, a nitrate ion, a sulfate ion, and a hydroxide ion. Examples of the organic ion include an organic acid ion, and examples thereof include a carboxylic acid ion.

The polyvalent metal compound is preferably an ionic polyvalent metal salt, and in particular, when the polyvalent metal salt is a magnesium salt or a calcium salt, the stability of the treatment liquid is further improved. In addition, as the counter ion of the polyvalent metal, any of an inorganic acid ion and an organic acid ion may be used.

Specific examples of the polyvalent metal salt include a calcium carbonate such as a heavy calcium carbonate and a light calcium carbonate, calcium nitrate, calcium chloride, calcium sulfate, magnesium sulfate, calcium hydroxide, magnesium chloride, magnesium carbonate, barium sulfate, chloride barium, zinc carbonate, zinc sulfide, aluminum silicate, calcium silicate, magnesium silicate, copper nitrate, calcium formate, calcium acetate, magnesium acetate, and aluminum acetate. These polyvalent metal salts may be used alone or in combination of two or more types thereof. Among these, since sufficient solubility in water can be secured and the use thereof reduces traces of the treatment liquid (makes traces less visible), at least any one of calcium formate, magnesium sulfate, calcium nitrate, and calcium chloride is preferable, and calcium formate or calcium nitrate is more preferable. In addition, these metal salts may have hydration water in the form of a raw material.

Examples of the metal salt other than the polyvalent metal salt include monovalent metal salts such as sodium salt and potassium salt, and for example, there are mentioned sodium sulfate, potassium sulfate, and the like.

Preferable examples of the organic acid include poly(meth)acrylic acid, acetic acid, glycolic acid, malonic acid, malic acid, maleic acid, ascorbic acid, succinic acid, glutaric acid, fumaric acid, citric acid, tartaric acid, lactic acid, sulfonic acid, orthophosphoric acid, pyrrolidonecarboxylic acid, pyrone carboxylic acid, pyrrole carboxylic acid, furancarboxylic acid, pyridine carboxylic acid, coumaric acid, thiophene carboxylic acid, nicotinic acid, derivatives of these compounds, and salts thereof. The organic acid may be used alone or in combination of two or more types thereof. Metal salts which are salts of organic acids are included in the metal salts described above.

Examples of the inorganic acid include sulfuric acid, hydrochloric acid, nitric acid, and phosphoric acid. The inorganic acid may be used alone or in combination of two or more types thereof.

Examples of the cationic resin (cationic polymer) include a cationic urethane resin, a cationic olefin resin, a cationic amine resin, and a cationic surfactant. The cationic polymer is preferably water-soluble.

Commercially available products can be used as the cationic urethane resin, and for example, HYDRAN CP-7010, CP-7020, CP-7030, CP-7040, CP-7050, CP-7060, and CP-7610 (trade names, manufactured by DIC Corporation), SUPERFLEX 600, 610, 620, 630, 640, and 650 (trade name, manufactured by DKS Co., Ltd.), urethane emulsion WBR-2120C and WBR-2122C (trade names, manufactured by Taisei Fine Chemical Co,. Ltd.), and the like can be used.

The cationic olefin resin is a resin having an olefin such as ethylene and propylene in the structural skeleton, and known ones can be appropriately selected and used. In addition, the cationic olefin resin may be in an emulsion state of being dispersed in a solvent containing water, an organic solvent, or the like. As the cationic olefin resin, a commercially available product can be used, and examples thereof include arrow base CB-1200 and CD-1200 (trade name, manufactured by Unitika Ltd.).

As the cationic amine resin (cationic polymer), any resin having an amino group in the structure may be used, and known ones can be appropriately selected and used. Examples thereof include polyamine resin, polyamide resin, and polyallylamine resin. Polyamine resin is a resin having an amino group in the main skeleton of the resin. Polyamide resin is a resin having an amide group in the main skeleton of the resin. Polyallylamine resin is a resin having a structure derived from an allyl group in the main skeleton of the resin.

In addition, as the cationic polyamine resin, Unisense KHE103L (hexamethylenediamine/epichlorohydrin resin, 1% aqueous solution of a pH of substantially 5.0, viscosity: 20 to 50 (mPa·s), an aqueous solution with a solid content concentration of 50% by mass) manufactured by Senka Co., Ltd., Unisense KHE104L (dimethylamine/epichlorohydrin resin, 1% aqueous solution of a pH of substantially 7.0, viscosity: 1 to 10 (mPa·s), an aqueous solution with a solid content concentration of 20% by mass), and the like can be used. In addition, specific examples of commercially available products of the cationic polyamine resin include FL-14 (manufactured by SNF Co. Ltd.), ARAFIX 100, 251S, 255, and 255LOX (manufactured by Arakawa Chemical Industries, Ltd.), DK-6810, 6853, and 6885; and WS-4010, 4011, 4020, 4024, 4027, and 4030 (manufactured by Seiko PMC Corporation), Papiogen P-105 (manufactured by Senka), Sumirez Resin 650 (30), 675A, 6615, and SLX-1 (manufactured by Taoka Chemical Co., Ltd.), Catiomaster (registered trademark) PD-1, 7, 30, A, PDT-2, PE-10, PE-30, DT-EH, EPA-SK01, and TMHMDA-E (manufactured by Yokkaichi Chemical Company, Limited), and Jetfix 36N, 38A, 5052 (manufactured by Satoda Kako Co., Ltd.).

Examples of the polyamine resin include a polyallylamine resin. Examples of the polyallylamine resin include polyallylamine hydrochloride, polyallylamineamide sulfate, allylamine hydrochloride/diallylamine hydrochloride copolymers, allylamine acetate/diallylamine acetate copolymers, allylamine acetate/diallylamine acetate copolymers, allylamine hydrochloride/dimethylallylamine hydrochloride copolymers, allylamine/dimethylallylamine copolymers, polydiallylamine hydrochloride, polymethyldiallylamine hydrochloride, polymethyldiallylamineamide sulfate, polymethyldiallylamine acetate, polydiallyldimethylammonium chloride, diallylamine acetate/sulfur dioxide copolymers, diallylmethylethylammonium ethylsulfate/sulfur dioxide copolymers, methyldiallylamine hydrochloride/sulfur dioxide copolymers, diallyldimethylammonium chloride/sulfur dioxide copolymers, and diallyldimethylammonium chloride/acrylamide copolymers.

Examples of the cationic surfactant include primary, secondary, and tertiary amine salt type compounds, alkylamine salts, dialkylamine salts, aliphatic amine salts, benzalconium salts, quaternary ammonium salts, quaternary alkylammonium salt, alkylpyridinium salt, sulfonium salt, phosphonium salt, onium salt, and imidazolinium salt.

A plurality of types of these aggregating agents may be used. In addition, when at least one of a polyvalent metal salt, an organic acid, and a cationic resin is selected among these aggregating agents, the aggregation action is more favorable, and thus an image with higher quality (particularly favorable color developing properties) can be formed.

Although the total content of the aggregating agent in the pretreatment liquid is not particularly limited, the total content of the aggregating agent in the pretreatment liquid is, for example, 0.1% by mass or more and 20% by mass or less, preferably 1% by mass or more and 20% by mass or less, and more preferably 2% by mass or more and 15% by mass or less, with respect to the total mass of the pretreatment liquid.

### 2.4.1. (2) Other Components

The pretreatment liquid may contain components such as resin particles, a water-soluble organic solvent, a surfactant, water, a wax, an additive, a resin dispersant, a preservative, a fungicide, a rust inhibitor, a chelating agent, a viscosity adjusting agent, an antioxidant, and an antifungal agent, in addition to the aggregating agent, as long as the function is not impaired. Since these components are the same as in the above-described ink jet ink composition, the detailed description thereof will be omitted.

### 2.4.1. (3) Method of Attaching Pretreatment Liquid to Recording Medium

As the method of attaching the pretreatment liquid to a recording medium, any one of non-contact type and contact type methods such as an ink jet method, an application method using a roller, a bar, and the like, a method of applying the pretreatment liquid to the recording medium using various sprays, a method of applying the pretreatment liquid by immersing the recording medium in the pretreatment liquid, and a method of applying the pretreatment liquid to the recording medium using a brush and the like, or a combined method thereof can be used.

The pretreatment liquid attachment step is preferably performed by an inkjet method. In such a case, the viscosity at 20°C is preferably 1.5 mPa·s or more and 15 mPa·s or less, more preferably 1.5 mPa·s or more and 7 mPa·s or less, and even more preferably 1.5 mPa·s or more and 5.5 mPa·s or less. When the pretreatment liquid is attached to the recording medium by an ink jet method, it is easy to efficiently form a predetermined pretreatment liquid attachment region on a recording medium.

In addition, when the pretreatment liquid attachment step is performed, it is preferable that the attachment of the pretreatment liquid to the recording medium by the pretreatment liquid attachment step is performed before or at the same time as the ink jet ink composition is pretreatment liquid to the recording medium by the ink attachment step. That is, after the pretreatment liquid is pretreatment liquid to the recording medium, or at the same time as the pretreatment liquid is pretreatment liquid to the recording medium, the attachment of the pretreatment liquid to the recording medium by the pretreatment liquid attachment step is preferably performed. The form in which the pretreatment liquid is attached to the recording medium and the ink jet ink composition is attached to the recording medium by the ink attachment step at the same time includes a from in which the pretreatment liquid is attached to the same scanning region by the same scanning as the scanning (pass) for attaching the ink jet ink composition to the recording medium.

For example, when the pretreatment liquid attachment step is performed by the ink jet method, the pretreatment liquid attachment step is performed by the same scanning as in the ink attachment step, or the attachment of the ink jet ink composition can be performed by the subsequent main scanning different from the main scanning of the pretreatment liquid attachment step.

### 2.4.2. Drying Step

The textile printing recording method according to the present embodiment may include a drying step between or after the ink attachment step and the treatment liquid attachment step described above. The drying step can be performed by a unit that performs drying using a drying mechanism. Examples of the unit that performs drying using a drying mechanism include a unit that blows normal temperature air or warm air onto the recording medium (ventilation type), a unit that irradiates the recording medium with radiation (such as infrared rays) which generates heat, (radiation type), a member that comes into contact with the recording medium and conducts heat to the recording medium (conduction type), and a combination of two or more of these units. When the recording method has the drying step, it is preferable to perform the drying step by a drying mechanism that heats the recording medium. A case where the drying mechanism that heats the recording medium is used as the drying mechanism is particularly referred to as a heating step.

The surface temperature of the recording medium at the time of attaching the ink jet ink composition and the treatment liquid composition to the recording medium is preferably 45°C or lower, and more preferably 20°C or higher and 45°C or lower. Further, the surface temperature is preferably 27.0°C or higher and 40°C or lower, and more preferably 28°C or higher and 30°C or lower. The temperature is a surface temperature of the portion of the recording surface of the recording medium, on which liquid attachment is applied in the attachment step, and is the highest temperature of the attachment step in the recording region. When the surface temperature is within the above range, the surface temperature is more preferably from a viewpoint of image quality, scratch resistance, and suppression of clogging.

The method of heating the recording medium is not particularly limited, and examples thereof include a heat press method, a normal pressure steam method, a high pressure steam method, and a thermofix method. A heat source at the time of heating is not particularly limited, and for example, an infrared lamp and the like can be used. The heating temperature is preferably a temperature at which resin particles in the ink are fused and the medium such as moisture volatilizes. For example, the heating temperature is preferably 100°C or higher and 200°C or lower, more preferably 170°C or lower, and even more preferably 160°C or lower. Here, the heating temperature in the heating step refers to a surface temperature of an image and the like formed at a fabric that is a recording medium. The time for performing heating is not particularly limited, and is, for example, 30 seconds or more and 20 minutes or less.

In addition, it is also preferable not to have a drying step between the ink attachment step and the treatment liquid attachment step. With this, an image having favorable color developing properties can be obtained in a shorter time.

### 2.5. Attachment Amount of Each Component

In the ink jet textile printing recording method according to the present embodiment, the attachment amount of the treatment liquid composition is preferably 5 (g/m²) or more and 100 (g/m²) or less, more preferably 10 (g/m²) or more and 70 (g/m²) or less, and even more preferably 10 (g/m²) or more and 55 (g/m²) or less. In this manner, an image having more favorable color developing properties can be obtained.

### 2.6. Fabric

The fabric used in the ink jet textile printing recording method according to the present embodiment is not particularly limited. The material constituting the fabric is not particularly limited, examples thereof include natural fibers such as cotton, linen, wool, and silk, synthetic fibers such as polypropylene, polyester, acetate, triacetate, polyamide, and polyurethane, and biodegradable fibers such as polylactic acid, and blended fibers thereof may be used. As the fabric, the fibers listed above may be in any form such as a woven fabric, a knitted fabric, and a non-woven fabric, and may be blended or woven.

### 2.7. Action and Effect

According to the ink jet textile printing recording method of the present embodiment, as a result of applying the organopolysiloxane to the image of the ink jet ink composition by the treatment liquid attachment step performed after the ink attachment step, the color developing properties (OD value) of the image formed by the ink jet ink composition can be enhanced. It is considered that one reason for this is that the refractive index of the organopolysiloxane is low, the light incident on the image is easily scattered and dispersed by the organopolysiloxane, and the regular reflection is less likely to occur.

In addition, when considering the mechanism by which the color developing properties of an image is enhanced, it is considered that the ink jet textile printing recording method according to the present embodiment has a more remarkable effect on a dark color image. Therefore, it is considered that the effect of making color developing properties favorable is high when the pigment contained in the ink jet ink composition is black, cyan, magenta, and the like. From this viewpoint, it is considered that a more remarkable effect can be obtained particularly when the pigment contained in the ink jet ink composition is black. 2.8. Inkjet Recording Apparatus

A recording apparatus according to the present embodiment includes an attachment mechanism that performs the ink attachment step and an attachment mechanism that performs the treatment liquid attachment step, and performs the recording method described above.

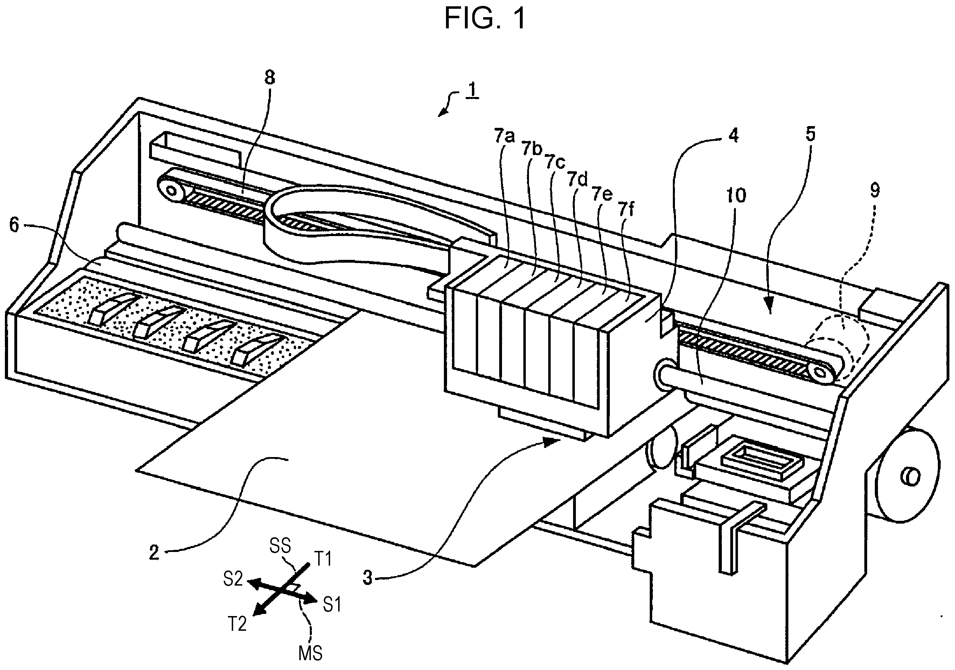

Hereinafter, an example of the ink jet recording apparatus configured to carry out the inkjet textile printing recording method according to the present embodiment will be described with reference to FIG. 1.

The ink jet textile printing apparatus used in the following description is a serial printer in which an inkjet head for recording is mounted on a carriage that moves in a predetermined direction, and the inkjet head moves with the movement of the carriage to eject liquid droplets to the fabric. The ink jet textile printing apparatus that can be applied to the recording method according to the present embodiment is not limited to a serial printer, and may be a line printer. A line printer is a type of printer in which an inkjet head is formed to be wider than the width of a fabric, and liquid droplets are ejected to the fabric without moving the inkjet head.

The ink jet textile printing apparatus is an apparatus for textile printing by landing liquid droplets on a fabric by an ink jet head as a liquid ejection portion that ejects minute liquid droplets of an ink composition or a reaction solution. FIG. 1 is a schematic perspective view showing an inkjet textile printing apparatus used in the embodiment.

As shown in FIG. 1, a printer 1 in the present embodiment includes an ink jet head 3, a carriage 4, a main scanning mechanism 5, a platen roller 6, and a control portion (not shown) that controls the operation of the entire printer 1. The carriage 4 has the ink jet head 3 mounted thereon, and liquid cartridges 7a, 7b, 7c, 7d, 7e, and 7f which store the ink composition and the treatment liquid composition to be supplied to the inkjet head 3 and which are detachably attached.

The main scanning mechanism 5 includes a timing belt 8 coupled to the carriage 4, a motor 9 that drives the timing belt 8, and a guide shaft 10. The guide shaft 10 serves as a support member for the carriage 4 and extends in a scanning direction of the carriage 4, that is, in a main scanning direction MS. The carriage 4 is driven by the motor 9 with the timing belt 8 interposed therebetween and can reciprocate along the guide shaft 10. With this, the main scanning mechanism 5 has a function of reciprocating the carriage 4 in the main scanning direction MS.

The platen roller 6 has a function of transporting a fabric 2 subjected to textile printing in a sub-scanning direction SS orthogonal to the main scanning direction MS, that is, in a length direction of the fabric 2. With this, the fabric 2 is transported in the sub-scanning direction SS. The carriage 4 on which the ink jet head 3 is mounted is configured to reciprocate in the main scanning direction MS, which substantially coincides with a width direction of the fabric 2, and the ink jet head 3 is configured to relatively scan the fabric 2 in the main scanning direction MS and the sub-scanning direction SS.

The liquid cartridges 7a, 7b, 7c, 7d, 7e, and 7f are six independent liquid cartridges. The liquid cartridges 7a, 7b, 7c, 7d, 7e, and 7f can store the ink composition and the treatment liquid composition used in the recording method in the present embodiment. In these liquid cartridges, the ink compositions exhibiting colors such as black, cyan, magenta, yellow, white, and orange, and the treatment liquid composition are separately stored, and can be used in any combination. In FIG. 1, the number of liquid cartridges is set to 6, but the number is not limited thereto. At the bottom portions of the liquid cartridges 7a, 7b, 7c, 7d, 7e, and 7f, there are provided supply ports (not shown) for supplying the ink composition or the treatment liquid composition stored in each liquid cartridge to the inkjet head 3.

The ink jet head 3 is a unit that sprays the ink composition and the treatment liquid composition supplied from the liquid cartridges 7a, 7b, 7c, 7d, 7e, and 7f from a plurality of nozzles to the fabric 2 under control by the control portion (not shown) to attach the ink composition and the treatment liquid composition to the fabric 2. The inkjet head 3 is provided with the plurality of nozzles for ejecting the ink composition and the treatment liquid composition and attaching the ink composition and the treatment liquid composition to the fabric 2 to be attached on a surface facing the fabric 2 to which the ink composition and the treatment liquid composition are attached. The plurality of nozzles are arrayed in a row to form a nozzle row, and the nozzle row is individually arranged corresponding to each color ink composition and treatment liquid composition. Each color ink composition and treatment liquid composition are supplied to the inkjet head 3 from each liquid cartridge, and are ejected as liquid droplets from a nozzle by an actuator (not shown) in the ink jet head 3. When the liquid droplets of the ink composition and the treatment liquid composition ejected are land on the fabric 2 and attached to the fabric 2 is performed, an image, a text, a pattern, a color, and the like using the ink are formed in a textile printing region of the fabric 2. In addition, a plurality of the ink jet heads 3 may be provided in the carriage 4.

Here, in the ink jet head 3, a piezoelectric element is used as an actuator which is a drive unit, but the method is not limited thereto. For example, an electromechanical conversion element that displaces a vibration plate as an actuator by electrostatic adsorption, or an electrothermal conversion element that ejects an ink composition as liquid droplets by air bubbles generated by heating may be used.

The ink jet head 3 has a nozzle group for treatment liquid composition for ejecting a treatment liquid composition and a nozzle group for ink composition for ejecting an ink composition. The nozzle group from which ejection is performed means a nozzle group used for recording in the recording method. When there is an image to be temporarily recorded on a region of the fabric facing the nozzle group at a time of performing the main scanning, the nozzle group is a nozzle group for ejecting an ink and the like from the nozzle, and a nozzle group continuous in the sub-scanning direction SS. Therefore, although the nozzle group itself exists, the nozzle group not used for recording in the recording method is not included in the nozzle group from which ejection is performed.

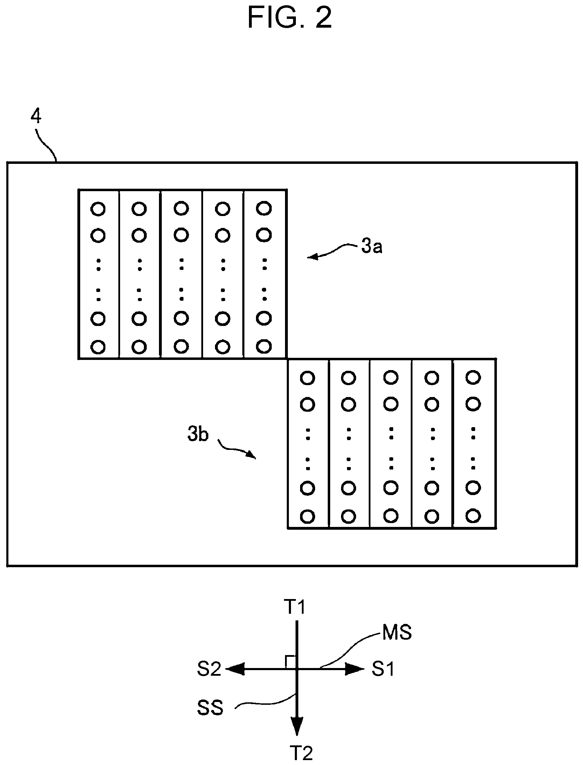

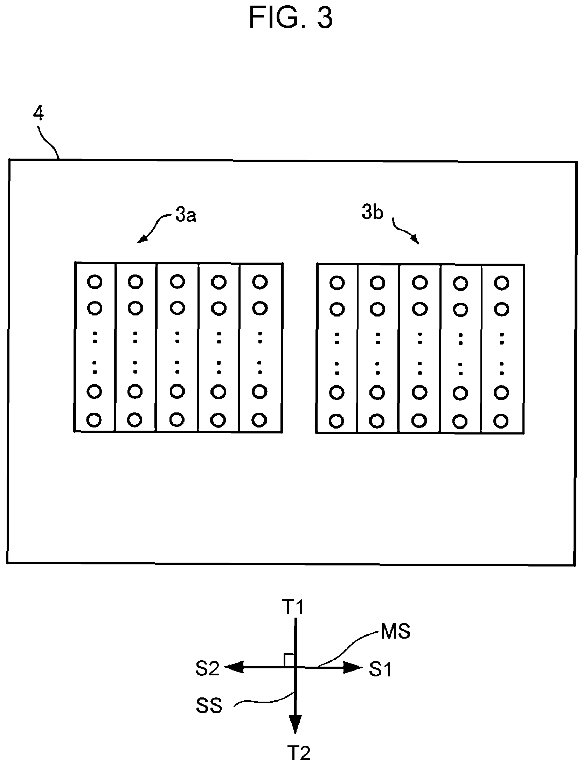

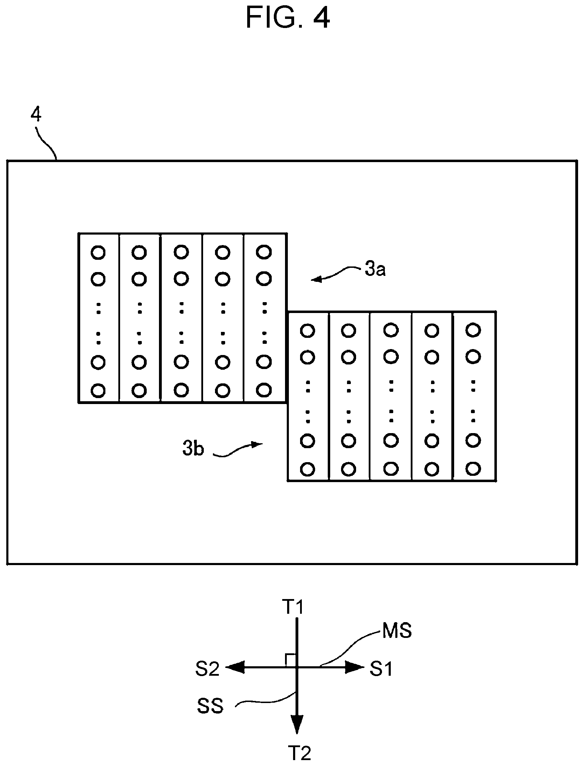

FIGS. 2, 3, and 4 show an example of the arrangement of a head of the ink jet head 3. In FIG. 2, an inkjet head 3a and an inkjet head 3b are arranged from the upstream to the downstream in the transport direction (sub-scanning direction SS). In addition, in FIG. 3, the ink jet head 3a and the ink jet head 3b are arranged at the same position in the sub-scanning direction SS, and are arranged side by side. In addition, in FIG. 4, the ink jet head 3a and the inkjet head 3b are arranged from the upstream to the downstream in the transport direction (sub-scanning direction SS), having portions overlapping each other.

In the recording method according to the present embodiment, the inkjet head 3 preferably has a configuration in which a nozzle group for treatment liquid composition used for recording is provided downstream or in an overlapping portion of the nozzle group for ink composition used for recording in the transport direction of the fabric. In addition, from the same viewpoint, preferably the head that ejects a treatment liquid composition is positioned at the same position as that of the head that ejects the ink composition with respect to the transport direction of the fabric, or is positioned downstream from the head that ejects the ink composition in the transport direction of the fabric.

With such a configuration, after the ink is attached, the treatment liquid can be attached to the same scanning region of the fabric by the same main scanning (alternate application) or after the ink is attached, the treatment liquid can be attached to the fabric by different main scanning (treatment liquid post-application). It is preferable that the inkjet ink composition and the treatment liquid are applied such that after the ink is attached to the fabric, the treatment liquid is attached to the fabric by different main scanning (treatment liquid post-application).

For example, in an example in FIG. 2, by using the ink jet head 3a as a head that ejects the ink composition and the ink jet head 3b as a head that ejects the treatment liquid composition, the nozzle group for the treatment liquid composition used for recording can be on provided downstream from the nozzle group for the ink composition used for recording in the transport direction (sub-scanning direction SS) of the fabric. In such a case, the treatment liquid composition is attached to the fabric after the ink composition. That is, the treatment liquid composition second strike can be performed, a layer containing the treatment liquid composition can be formed, and then a layer containing the ink composition can be laminated and formed.

For example, in an example in FIG. 3, when the ink jet head 3a is used as a head that ejects the ink composition, the ink jet head 3b is used as a head that ejects the treatment liquid composition, and a portion at which the nozzle group for the treatment liquid composition used for recording and a nozzle group for the ink composition used for recording overlap with each other is included, alternate strike can be performed. That is, the treatment liquid composition and the ink composition can be alternately overlapped and laminated (laminated in the form of mille-feuille).

The "overlapping portion" refers to a portion positioned at the same position in the sub-scanning direction SS, among the nozzle group for the ink composition used for recording and the nozzle group for the treatment liquid composition used for recording. With this, the ink composition and the treatment liquid composition are attached to the fabric in an overlapping manner by the same main scanning.

For example, in an example in FIG. 4, when the ink jet head 3a is used as a head that ejects the ink composition, the ink jet head 3b is used as a head that ejects the treatment liquid composition, and a portion at which the nozzle group for the treatment liquid composition used for recording and the nozzle group for the ink composition used for recording overlap each other is included, alternate strike can be performed. In addition, when the inkjet head 3a is used as a head that ejects the ink composition, the ink jet head 3b is used as a head that ejects the treatment liquid composition, a portion at which the nozzle group for the treatment liquid composition used for recording and the nozzle group for the ink composition used for recording overlap each other is not included, and a nozzle group for the treatment liquid composition used for recording is provided downstream from the nozzle group for the ink composition used for recording in the transport direction (sub-scanning direction SS) of the fabric, treatment liquid composition second strike can be performed.

The printer 1 may be provided with a drying unit or a heating unit (neither of which is shown). The drying unit and the heating unit are units that efficiently dry the treatment liquid composition or the ink attached to the fabric 2. As long as the drying unit and the heating unit are provided at positions at which the fabric 2 can be dried and heated, the installation positions thereof are not particularly limited. In order to efficiently dry the ink or the treatment liquid composition attached to the fabric 2, for example, in FIG. 1, the drying unit and the heating unit can be installed at a position facing the ink jet head 3.

Examples of the drying unit and the heating unit include a print heater mechanism that heats the fabric 2 in contact with a heat source, a mechanism that performs irradiation with infrared rays or microwaves, which are electromagnetic waves having a maximum wavelength of approximately 2,450 MHz, and the like, and a dryer mechanism that blows warm air. Heating of the fabric 2 is performed before or when the liquid droplets ejected from the nozzle of the ink jet head 3 are attached to the fabric 2. Various heating conditions, for example, timing of heating execution, heating temperature, heating time, and the like are controlled by the control portion.

In addition, the drying unit and the heating unit may be installed on the downstream of the fabric 2 in the transport direction. In this case, the ink or the treatment liquid composition ejected from the nozzle is attached to the fabric 2 to form an image, and then the fabric 2 is heated. With this, dryness of the ink or the treatment liquid composition attached to the fabric 2 are improved.

### 3. Examples and Comparative Examples

Hereinafter, the present disclosure will be specifically described with reference to Examples, and the present disclosure is not limited to these Examples. Hereinafter, "part" and "%" are based on mass unless otherwise specified. Unless otherwise specified, the evaluation was performed in an environment of a temperature of 25.0°C and a relative humidity of 40.0%. 3.1. Preparation of Treatment Liquid

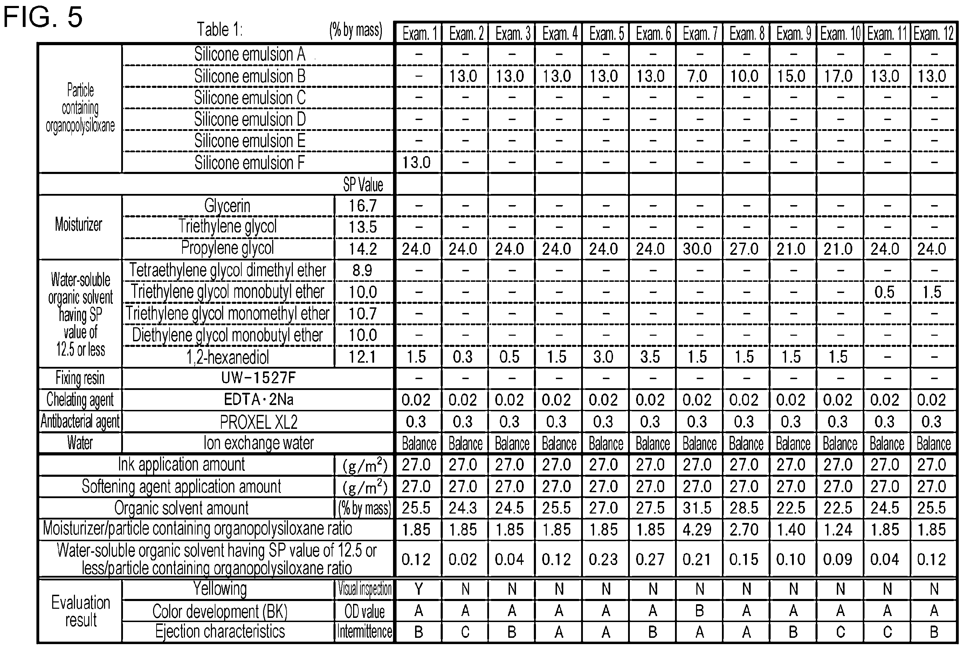

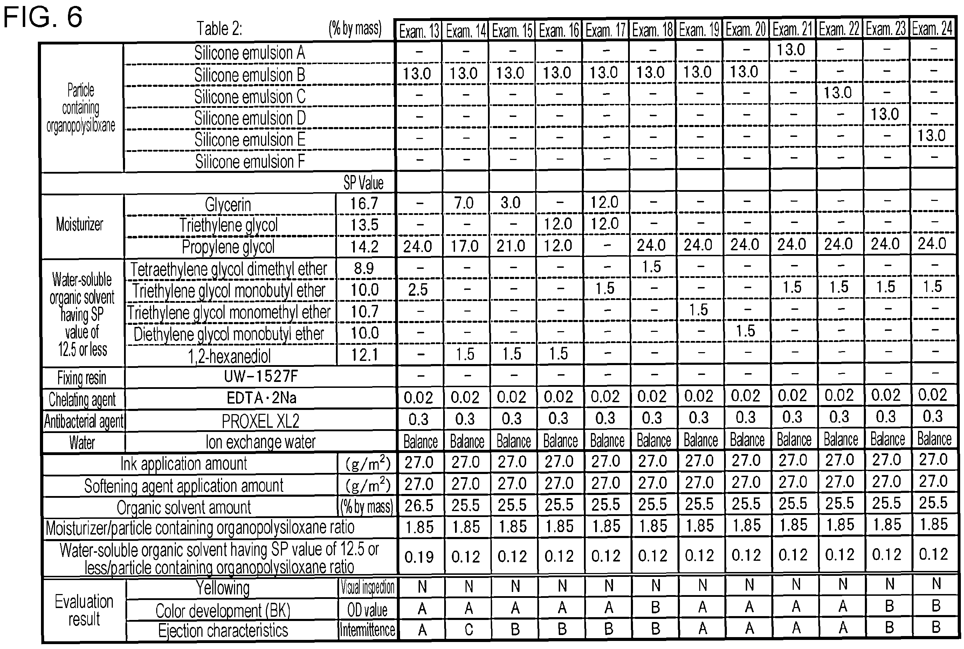

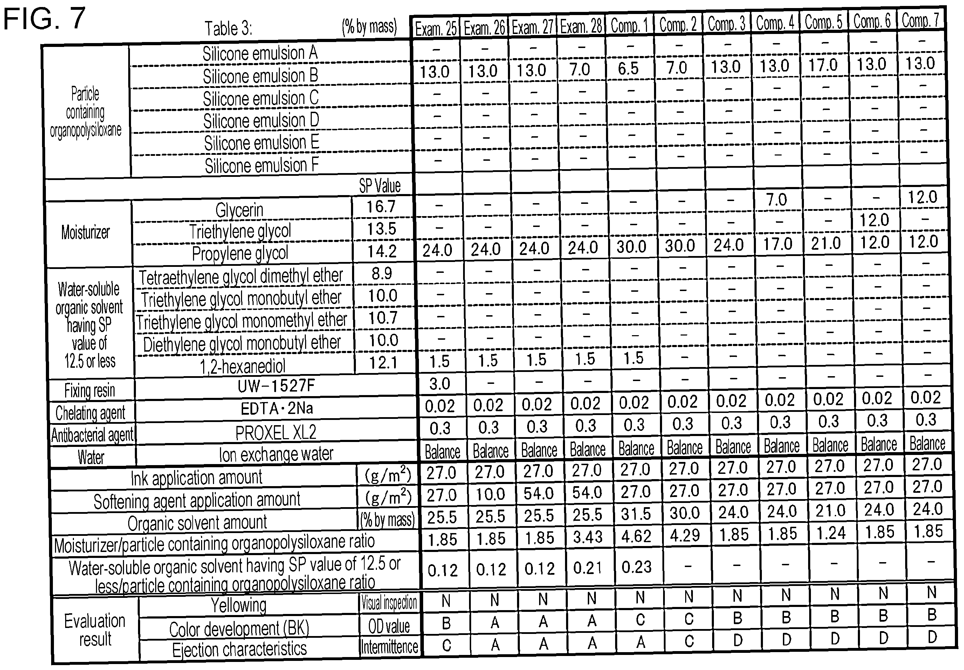

Each component was put in a container so as to have the composition shown in Tables 1 to 3 (FIGS. 5 to 7), the components mixed and stirred with a magnetic stirrer for 2 hours, and then the mixture was filtered using a membrane filter having a pore size of 5 µm to obtain an ink jet treatment liquid composition for pigment textile printing to be used in each Example and each Comparative Example. The numerical values in the tables represent the amount of active components. That is, the numerical value of the fixing resin represents the solid content, the numerical values of the chelating agent and the antibacterial agent represent the amounts of active components, and the silicone emulsion represents the content of the non-volatile component in the emulsion. Further, "Exam." in the tables represents Example, and "Comp." represents Comparative Example.

Silicone emulsions A to F were prepared as follows.

### Silicone emulsion A

350 g of dimethyl silicone oil ("KF-96H-100000cs", base oil viscosity: 100,000 mm²/s, manufactured by Shin-Etsu Chemical Co., Ltd.), 600 g of ion exchange water, and 50 g of polyoxyethylene tridecyl ether (Newcol 1305 (manufactured by Nippon Nyukazai Co., Ltd.)) as an emulsifier were put into a beaker. The contents of the beaker were stirred for 20 minutes at a rotation speed of 15,000 rpm using a homogenizer a homogenizer ("ULTRA TURRAX T18" manufactured by IKA), and allowed to stand for 30 minutes. Next, the contents of the beaker were filtered through a 200-mesh stainless steel filter to obtain silicone emulsion A. In silicone emulsion A, emulsified particles of dimethyl silicone oil were dispersed.

### · Silicone emulsion B

Silicone emulsion B was prepared in the same manner as silicone emulsion A except that dimethyl silicone oil ("KF-96H-10000cs", base oil viscosity: 10,000 mm²/s, manufactured by Shin-Etsu Chemical Co., Ltd.) was used.

### · Silicone emulsion C

Silicone emulsion C was prepared in the same manner as silicone emulsion A except that dimethyl silicone oil ("KF-96-1000cs" base oil viscosity of 1000 mm²/s, manufactured by Shin-Etsu Chemical Co., Ltd.) was used.

### · Silicone emulsion D

Silicone emulsion D was prepared in the same manner as silicone emulsion A except that methyl phenyl silicone oil ("KF-50-3000cs", base oil viscosity: 3000 mm²/s, manufactured by Shin-Etsu Chemical Co., Ltd.) was used.

### · Silicone emulsion E

Silicone emulsion E was prepared in the same manner as silicone emulsion A except that methyl hydrogen silicone oil ("KF-99", base oil viscosity: 20 mm²/s, manufactured by Shin-Etsu Chemical Co., Ltd.) was used.

### · Silicone emulsion F

Silicone emulsion F was prepared in the same manner as silicone emulsion A except that amino-modified silicone oil ("X-22-161A" manufactured by Shin-Etsu Chemical Co., Ltd.) was used.

### 3.2. Preparation of Ink Jet Ink Composition

Each component was put in a container so as to have the following composition, the components mixed and stirred with a magnetic stirrer for 2 hours, and then the mixture was filtered using a membrane filter having a pore size of 5 µm to obtain an ink jet ink composition to be used in each Example and each Comparative Example. The numerical values below represent the amount of active components. That is, the numerical value of UW-1527F, which is the fixing resin, represents the solid content, and E1010, EDTA·2Na, PROXEL XL2, and carbon black represent the amount of active components.
UW-1527F ... 6.0% by mass
Carbon black ... 5.0% by mass
Glycerin 14.0% by mass
Triethylene glycol 4.5% by mass
Triethylene glycol monobutyl ether 1.0% by mass
E1010 0.5% by mass
Triethanolamine 1.0% by mass
EDTA 2Na 0.02% by mass
PROXEL XL2 0.3% by mass

The abbreviations and other trade names shown in Tables 1 to 3 (FIGS. 5 to 7) are supplemented.
- UW-1527F: ETERNACOLL UW series, manufactured by UBE Corporation, Ltd, urethane resin
- Surfactant (E1010): OLFINE E1010, manufactured by Nissin Chemical Industry Co., Ltd., acetylene glycol-based surfactant)
- PROXEL XL2 (trade name, manufactured by LONZA KK., antibacterial agent)
- EDTA·2Na: ethylenediamine tetraacetate disodium

### 3.3. Evaluation Method

### 3.3.1. Preparation of Textile Printed Matter

### Pretreatment

After padding a cotton broadcloth with a pretreatment liquid composed of 7.0 parts of Unisense 104L (water-soluble cationic polymer, manufactured by Senka Corporation) and 93.0 parts of water by a pad method at a drawing ratio of 70%, the cotton broadcloth was dried at 120°C for 3 minutes to obtain a pretreated fabric.

### Textile Printed Matter

An apparatus modified from PX-H8000 (manufactured by Seiko Epson Corporation) was used for printing. A 100% cotton white broad was used as a recording medium. As a head, a head unit (a distance between nozzles in the width direction of the recording medium was 600 dpi, the number of nozzles was 600) was used.

A textile printed matter in which a solid pattern image was formed at an A4-size fabric (ink was textile printed) was produced.

In addition, the "solid pattern image" means an image in which dots are recorded for all pixels each indicating a minimum recording unit region defined by the recording resolution (Duty 100%).

### Recording Order

After an image was formed in the pretreated fabric using the ink jet ink composition, the ink jet treatment liquid composition for pigment textile printing of each Example was applied to the printing region of the solid pattern formed by ink jet by the same inkjet method through the second strike, and the textile printed matter was heat-treated in an oven at 160°C for 3 minutes and dried.

### 3.3.2. Evaluation of Color Developing Properties

An OD value of black of the textile printed matter in each Example was measured using a fluorescence spectrophotometer ("FD-7", manufactured by Konica Minolta, Inc.) and the color developing properties were evaluated. The results of evaluation with respect to the following criteria are shown in the table. When the evaluation result is A or B, it can be said that favorable color development is obtained.
A: OD value of 1.50 or more
B: OD value of 1.45 or more and less than 1.50
C: OD value of less than 1.45

### 3.3.3. Evaluation of Ejection Characteristics (Intermittence)

After idle driving for 3 minutes using an apparatus modified from PX-H8000 (manufactured by Seiko Epson Corporation), the number of missing nozzles was counted using a nozzle check pattern. The results of evaluation with respect to the following criteria are shown in the table. When the evaluation results is A, B, or C, it can be said that favorable characteristics are obtained.
A: The number of non-ejection nozzles is less than 1.
B: The number of non-ejection nozzles is 10 or more and less than 30.
C: The number of non-ejection nozzles is 30 or more and less than 60.
D: The number of non-ejection nozzles is 60 or more.

### 3.3.4. Evaluation of Yellowing

After applying only the ink jet treatment liquid composition for pigment textile printing of each Example to a cotton, the cotton was placed in a drying oven at 160°C for 5 minutes, and it was visually determined whether or not the fabric changed yellow. The results were put in the table, with "Y" when the color of the fabric was changed and "N" when the color of the fabric was not changed.

In addition, although not described in the tables, there was no bleeding in the images in Examples 1 to 27, and Example 28 had a slight bleeding in the image. Example 28 is an example in which the content of silicone oil in the treatment liquid composition was reduced and the attachment amount of the treatment liquid composition was increased.

### 3.4. Evaluation Results

As seen from Tables 1 to 3 (FIGS. 5 to 7), in each Example in which the particles containing organopolysiloxane, the water-soluble organic solvent with an SP value of 12.5 or less, and water are contained, and the content of the particles containing organopolysiloxane is 7% by mass or more with respect to the total amount of the treatment liquid composition, the color developing properties of the images and the ejection stability were favorable.

The present disclosure includes a configuration substantially the same as the configuration described in the embodiment, for example, a configuration having the same function, method, and result, or a configuration having the same purpose and effect. Further, the present disclosure includes configurations in which non-essential parts of the configuration described in the embodiments are replaced. In addition, the present disclosure includes configurations that achieve the same operational effects or configurations that can achieve the same objects as those of the configurations described in the embodiment. Further, the present disclosure includes configurations in which a known technology is added to the configurations described in the embodiments.

The following contents are derived from the above-described embodiment and modification example.

An inkjet treatment liquid composition for pigment textile printing includes
a particle containing organopolysiloxane,
a water-soluble organic solvent having an SP value of 12.5 or less, and water, in which
a content of the particle containing the organopolysiloxane is 7% by mass or more with respect to a total amount of the treatment liquid composition.

According to the treatment liquid composition, when the organopolysiloxane is applied to an image by an ink jet ink composition, the color developing properties (OD value) of the image can be enhanced. It is considered that one reason for this is that the refractive index of the organopolysiloxane is low, the light incident on the image is easily scattered and dispersed by the organopolysiloxane, and the regular reflection is less likely to occur.

On the other hand, when the treatment liquid composition containing a large amount of organopolysiloxane is applied to ink jet, there is a concern that the ejection stability (intermittent printing stability) may be decreased due to layer separation or dispersion breakage of the organopolysiloxane in the treatment liquid caused by evaporation of moisture.

In contrast, favorable ejection stability can be obtained by using a relatively hydrophobic water-soluble organic solvent having an SP value of 12.5 or less in the treatment liquid composition. It is presumed that one reason for this is that the water-soluble organic solvent having relatively high hydrophobicity can stabilize the state of presence of the organopolysiloxane in the treatment liquid.

In general, in order to improve intermittent printing stability, a hydrophilic solvent (moisturizer) having a high SP value such as glycerin for suppressing moisture evaporation is often used, but in the system containing the organopolysiloxane, it is considered that the ejection stability cannot be always improved simply by blending a hydrophilic moisturizer. Therefore, the treatment liquid composition obtains favorable ejection stability by using a water-soluble organic solvent having a relatively high hydrophobicity, and the problem is solved based on the technical idea opposite to the general method.

In the treatment liquid composition,
the organopolysiloxane may be an oily compound.

According to this treatment liquid composition, the organopolysiloxane can be stably dispersed in the form of particles in an aqueous matrix.

In the treatment liquid composition,
a content of a coloring material may be 0.1% by mass or less with respect to the total amount of the treatment liquid composition.

According to this treatment liquid composition, the property of a low refractive index of the coating film formed by the organopolysiloxane can be further effectively extracted.

In the treatment liquid composition,
the content of the particle containing the organopolysiloxane may be 90% by mass or more with respect to a total solid content in the treatment liquid composition.

According to this treatment liquid composition, an image having more favorable color developing properties can be formed.

In the treatment liquid composition,
the organopolysiloxane may be a nonionic silicone.

According to this treatment liquid composition, the organopolysiloxane is chemically more stable, and yellowing of the image and the like can be further suppressed.

In the treatment liquid composition,
the organopolysiloxane may be one or more selected from dimethyl silicone, methyl phenyl silicone, and methyl hydrogen silicone.

In the treatment liquid composition,
a content of the water-soluble organic solvent having an SP value of 12.5 or less may be 0.1% by mass or more and 3.0% by mass or less with respect to the total amount of the treatment liquid composition.

According to this treatment liquid composition, the dispersion structure of the organopolysiloxane is more easily stabilized.

In the treatment liquid composition,
the water-soluble organic solvent having an SP value of 12.5 or less may contain a polyhydric alcohol.

According to this treatment liquid composition, the dispersion structure of the organopolysiloxane is more easily stabilized. In addition, the bleeding of an image is less likely to occur.

In the treatment liquid composition,
a water-soluble organic solvent having an SP value of 13 or more may be further contained in an amount of 15% by mass or more and 40% by mass or less with respect to the total amount of the treatment liquid composition.

According to this treatment liquid composition, the system of the treatment liquid composition can be further stabilized.

In the treatment liquid composition,
an SP value lower limit of the water-soluble organic solvent having an SP value of 12.5 or less may be 9 or more.

According to this treatment liquid composition, the system of the treatment liquid composition can be further stabilized.

In the treatment liquid composition,
an SP value upper limit of the water-soluble organic solvent having an SP value of 13 or more may be 17 or less.

According to this treatment liquid composition, the system of the treatment liquid composition can be further stabilized.

In the treatment liquid composition,
the content of the particle containing the organopolysiloxane may be 17% by mass or less with respect to the total amount of the treatment liquid composition.

According to this treatment liquid composition, the system of the treatment liquid composition can be further stabilized and the printing stability can be further improved.

In the treatment liquid composition,
a mass ratio of a content of the water-soluble organic solvent having an SP value of 12.5 or less to the content of the particle containing the organopolysiloxane may be 0.04 or more and 0.27 or less.

According to this treatment liquid composition, the printing stability can be further enhanced.

In the treatment liquid composition,
a mass ratio of a content of the water-soluble organic solvent having an SP value of 13 or more to the content of the particle containing the organopolysiloxane may be 1 or more and 2 or less.

According to this treatment liquid composition, more favorable ejection stability can be obtained, and the generation of mist can be further reduced.

An inkjet textile printing recording method includes
an ink attachment step of attaching an ink jet ink composition containing a pigment and water to a fabric by an ink jet method, and
a treatment liquid attachment step of attaching the treatment liquid composition to the fabric by an ink jet method, after the ink attachment step.

According to the textile printing recording method, an image having favorable color developing properties can be stably recorded.

In the textile printing recording method,
an attachment amount of the treatment liquid composition may be 10 g/m² or more and 55 g/m² or less.

According to the textile printing recording method, an image having more favorable color development can be obtained.

In the textile printing recording method,
a drying step may not be provided between the ink attachment step and the treatment liquid attachment step.

According to the textile printing recording method, an image having favorable color development can be obtained in a shorter time.

## Claims

1. An ink jet treatment liquid composition for pigment textile printing, comprising:
a particle containing organopolysiloxane;
a water-soluble organic solvent having an SP value of 12.5 or less; and
water, wherein
a content of the particle containing the organopolysiloxane is 7% by mass or more with respect to a total amount of the treatment liquid composition.

2. The ink jet treatment liquid composition for pigment textile printing according to claim 1, wherein
the organopolysiloxane is an oily compound.

3. The ink jet treatment liquid composition for pigment textile printing according to claim 1, wherein
a content of a coloring material is 0.1% by mass or less with respect to the total amount of the treatment liquid composition.

4. The ink jet treatment liquid composition for pigment textile printing according to claim 1, wherein
the content of the particle containing the organopolysiloxane is 90% by mass or more with respect to a total solid content in the treatment liquid composition.

5. The ink jet treatment liquid composition for pigment textile printing according to claim 1, wherein
the organopolysiloxane is a nonionic silicone.

6. The ink jet treatment liquid composition for pigment textile printing according to claim 1, wherein
the organopolysiloxane is one or more selected from dimethyl silicone, methyl phenyl silicone, and methyl hydrogen silicone.

7. The ink jet treatment liquid composition for pigment textile printing according to claim 1, wherein
a content of the water-soluble organic solvent having an SP value of 12.5 or less is 0.1% by mass or more and 3.0% by mass or less with respect to the total amount of the treatment liquid composition.

8. The ink jet treatment liquid composition for pigment textile printing according to claim 1, wherein
the water-soluble organic solvent having an SP value of 12.5 or less contains a polyhydric alcohol.

9. The ink jet treatment liquid composition for pigment textile printing according to claim 1, further comprising:
a water-soluble organic solvent having an SP value of 13 or more in an amount of 15% by mass or more and 40% by mass or less with respect to the total amount of the treatment liquid composition.

10. The ink jet treatment liquid composition for pigment textile printing according to claim 1, wherein
an SP value lower limit of the water-soluble organic solvent having an SP value of 12.5 or less is 9 or more.

11. The ink jet treatment liquid composition for pigment textile printing according to claim 9, wherein
an SP value upper limit of the water-soluble organic solvent having an SP value of 13 or more is 17 or less.

12. The ink jet treatment liquid composition for pigment textile printing according to claim 1, wherein
the content of the particle containing the organopolysiloxane is 17% by mass or less with respect to the total amount of the treatment liquid composition.

13. The ink jet treatment liquid composition for pigment textile printing according to claim 1, wherein
a mass ratio of a content of the water-soluble organic solvent having an SP value of 12.5 or less to the content of the particle containing the organopolysiloxane is 0.04 or more and 0.27 or less.

14. The ink jet treatment liquid composition for pigment textile printing according to claim 9, wherein
a mass ratio of a content of the water-soluble organic solvent having an SP value of 13 or more to the content of the particle containing the organopolysiloxane is 1 or more and 2 or less.

15. An inkjet textile printing recording method comprising:
an ink attachment step of attaching an ink jet ink composition containing a pigment and water to a fabric by an ink jet method; and
a treatment liquid attachment step of attaching the treatment liquid composition according to claim 1 to the fabric by an ink jet method, after the ink attachment step.

16. The ink jet textile printing recording method according to claim 15, wherein
an attachment amount of the treatment liquid composition is 10 g/m² or more and 55 g/m² or less.

17. The ink jet textile printing recording method according to claim 15, wherein
a drying step is not provided between the ink attachment step and the treatment liquid attachment step.
